# EUROPEAN PATENT APPLICATION

(11) **EP 4 529 275 A1**
(43) Date of publication of application: **26.03.2025**
(21) Application number: 22942621.8
(22) Date of filing: 17.05.2022
(51) Int. Cl.: H04W 36/22, H04W 52/02

(54) **COMMUNICATION SYSTEM, MANAGEMENT CONTROL DEVICE, AND CONTROL METHOD**

(71) Applicant: NIPPON TELEGRAPH AND TELEPHONE CORPORATION, Chiyoda-ku, Tokyo 100-8116 (JP)
(72) Inventor: UMEDA, Karin, Musashino-shi, Tokyo 180-8585 (JP); SAKAI, Yoshihito, Musashino-shi, Tokyo 180-8585 (JP); NOMURA, Hiroko, Musashino-shi, Tokyo 180-8585 (JP); UJIKAWA, Hirotaka, Musashino-shi, Tokyo 180-8585 (JP); SHIMADA, Tatsuya, Musashino-shi, Tokyo 180-8585 (JP)
(74) Representative: Brevalex
(86) International application number: PCT/JP2022/020495
(87) International publication number: WO 2023/223416

(57) **Abstract**

Provided is a communication system including: one or more wireless stations that perform wireless communication with one or more terminals; a plurality of distributed stations connected, directly or via another device, to the one or more wireless stations; a cooperation information collection unit that acquires, at a predetermined cycle, cooperation information indicating a state of communication between the plurality of distributed stations and the one or more terminals; an optical path switching control unit that controls switching of an optical path between the one or more wireless stations and the plurality of distributed stations when it is determined, on the basis of the cooperation information, that the switching of the optical path between the one or more wireless stations and the plurality of distributed stations is required; and a sleep control unit that causes each of the distributed stations that can sleep to transition to a sleep state after the switching of the optical path is performed.

## Description

### Technical Field

The present invention relates to a communication system, a management control device, and a control method.

### Background Art

In a conventional communication system in which wireless communication is performed between a terminal and each base station, each base station computes a throughput and autonomously goes to sleep when the throughput exceeds a threshold to achieve power saving. In such a communication system, a terminal connected to a base station that has gone to sleep is instructed on a handover to a base station having the largest throughput. This allows the terminal to continuously perform communication.

### Citation List

### Non Patent Literature

Non Patent Literature 1: Yong Sheng Soh, Tony Q. S. Quek, and Marios Kountouris, "Dynamic Sleep Mode Strategies in Energy Efficient Cellular Networks", IEEE, Communications Theory, pp. 3131 3136, June 2013.

### Summary of Invention

### Technical Problem

However, in the conventional communication system, there is a possibility that a terminal connected to a base station that has gone to sleep is handed over to a base station to which a large number of terminals are already connected, resulting in deterioration of communication quality. Furthermore, in the conventional communication system, since each base station autonomously verifies requirements for sleep, overall optimization is disabled, and there has been a possibility that an effect of power saving is limited.

In view of the above circumstances, an object of the present invention is to provide a technique capable of increasing an effect of power saving without involving deterioration of communication quality.

### Solution to Problem

One aspect of the present invention is a communication system including: one or more wireless stations that perform wireless communication with one or more terminals; a plurality of distributed stations connected, directly or via another device, to the one or more wireless stations; a cooperation information collection unit that acquires, at a predetermined cycle, cooperation information indicating a state of communication between the plurality of distributed stations and the one or more terminals; an optical path switching control unit that controls switching of an optical path between the one or more wireless stations and the plurality of distributed stations when it is determined, on the basis of the cooperation information, that the switching of the optical path between the one or more wireless stations and the plurality of distributed stations is required; and a sleep control unit that causes each of the distributed stations that can sleep to transition to a sleep state after the switching of the optical path is performed.

One aspect of the present invention is a management control device including: a cooperation information collection unit that acquires, at a predetermined cycle, cooperation information indicating a state of communication between a plurality of distributed stations connected, directly or via another device, to one or more wireless stations that perform wireless communication with one or more terminals, and the one or more terminals; an analysis unit that verifies, on the basis of the cooperation information, whether or not switching of an optical path between the one or more wireless stations and the plurality of distributed stations and sleep control are required; an optical path switching control unit that controls the switching of the optical path between the one or more wireless stations and the plurality of distributed stations when it is determined that the switching of the optical path between the one or more wireless stations and the plurality of distributed stations is required; and a sleep control unit that causes each of the distributed stations that can sleep to transition to a sleep state after the switching of the optical path is performed.

One aspect of the present invention is a control method including: acquiring, at a predetermined cycle, cooperation information indicating a state of communication between a plurality of distributed stations connected, directly or via another device, to one or more wireless stations that perform wireless communication with one or more terminals, and the one or more terminals; controlling switching of an optical path between the one or more wireless stations and the plurality of distributed stations when it is determined, on the basis of the cooperation information, that the switching of the optical path between the one or more wireless stations and the plurality of distributed stations is required; and causing each of the distributed stations that can sleep to transition to a sleep state after the switching of the optical path is performed.

### Advantageous Effects of Invention

The present invention enables to increase an effect of power saving without involving deterioration of communication quality.

### Brief Description of Drawings

[FIG. 1] A diagram for explaining an overall configuration and an outline of processing of a mobile network (NW) system in the present invention.
[FIG. 2] A diagram illustrating a configuration example of a mobile NW system in a first embodiment.
[FIG. 3] A flowchart illustrating an example of a flow of a sleep process executed by a management control device in the first embodiment.
[FIG. 4] A flowchart illustrating an example of a flow of the sleep process executed by the management control device in the first embodiment.
[FIG. 5] A sequence diagram illustrating an example of a detailed flow of the sleep process executed by the mobile NW system in the first embodiment.
[FIG. 6] A flowchart illustrating an example of a flow of a sleep cancellation process executed by the management control device in the first embodiment.
[FIG. 7] A sequence diagram illustrating an example of a detailed flow of the sleep cancellation process executed by the mobile NW system in the first embodiment.
[FIG. 8] A diagram illustrating a configuration example of a mobile NW system in a modification of the first embodiment.
[FIG. 9] A diagram illustrating a configuration example of a mobile NW system in a modification of the first embodiment.
[FIG. 10] A sequence diagram illustrating an example of a detailed flow of a sleep process executed by the mobile NW system in the modification of the first embodiment.
[FIG. 11] A sequence diagram illustrating an example of a detailed flow of a sleep cancellation process executed by the mobile NW system in the modification of the first embodiment.
[FIG. 12] A diagram illustrating a configuration example of a mobile NW system in a second embodiment.
[FIG. 13] A flowchart illustrating an example of a flow of a sleep process executed by a management control device in the second embodiment.
[FIG. 14] A flowchart illustrating an example of a flow of the sleep process executed by the management control device in the second embodiment.
[FIG. 15] A sequence diagram illustrating an example of a detailed flow of the sleep process executed by the mobile NW system in the second embodiment.
[FIG. 16] A flowchart illustrating an example of a flow of a sleep cancellation process executed by the management control device in the second embodiment.
[FIG. 17] A sequence diagram illustrating an example of a detailed flow of the sleep cancellation process executed by the mobile NW system in the second embodiment.
[FIG. 18] A sequence diagram illustrating an example of a detailed flow of a sleep process executed by a mobile NW system in a modification of the second embodiment.
[FIG. 19] A sequence diagram illustrating an example of a detailed flow of a sleep cancellation process executed by the mobile NW system in the modification of the second embodiment.
[FIG. 20] A flowchart illustrating an example of a flow of a sleep process executed by a management control device in a third embodiment.
[FIG. 21] A flowchart illustrating an example of a flow of the sleep process executed by the management control device in the third embodiment.
[FIG. 22] A sequence diagram illustrating an example of a detailed flow of the sleep process executed by a mobile NW system in the third embodiment.
[FIG. 23] A flowchart illustrating an example of a flow of a sleep cancellation process executed by the management control device in the third embodiment.
[FIG. 24] A sequence diagram illustrating an example of a detailed flow of the sleep cancellation process executed by the mobile NW system in the third embodiment.
[FIG. 25] A sequence diagram illustrating an example of a detailed flow of a sleep process executed by a mobile NW system in a modification of the third embodiment.
[FIG. 26] A sequence diagram illustrating an example of a detailed flow of a sleep cancellation process executed by the mobile NW system in the modification of the third embodiment.
[FIG. 27] A diagram illustrating a configuration example of a mobile NW system in a fourth embodiment.
[FIG. 28] A flowchart illustrating an example of a flow of a sleep process executed by a management control device in the fourth embodiment.
[FIG. 29] A flowchart illustrating an example of a flow of the sleep process executed by the management control device in the fourth embodiment.
[FIG. 30] A sequence diagram illustrating an example of a detailed flow of the sleep process executed by the mobile NW system in the fourth embodiment.
[FIG. 31] A flowchart illustrating an example of a flow of a sleep cancellation process executed by the management control device in the fourth embodiment.
[FIG. 32] A sequence diagram illustrating an example of a detailed flow of the sleep cancellation process executed by the mobile NW system in the fourth embodiment.
[FIG. 33] A sequence diagram illustrating an example of a detailed flow of a sleep process executed by a mobile NW system in a modification of the fourth embodiment.
[FIG. 34] A sequence diagram illustrating an example of a detailed flow of a sleep cancellation process executed by the mobile NW system in the modification of the fourth embodiment.

### Description of Embodiments

Hereinafter, embodiments of the present invention will be described with reference to the drawings.

### (Overall Configuration and Outline of Processing)

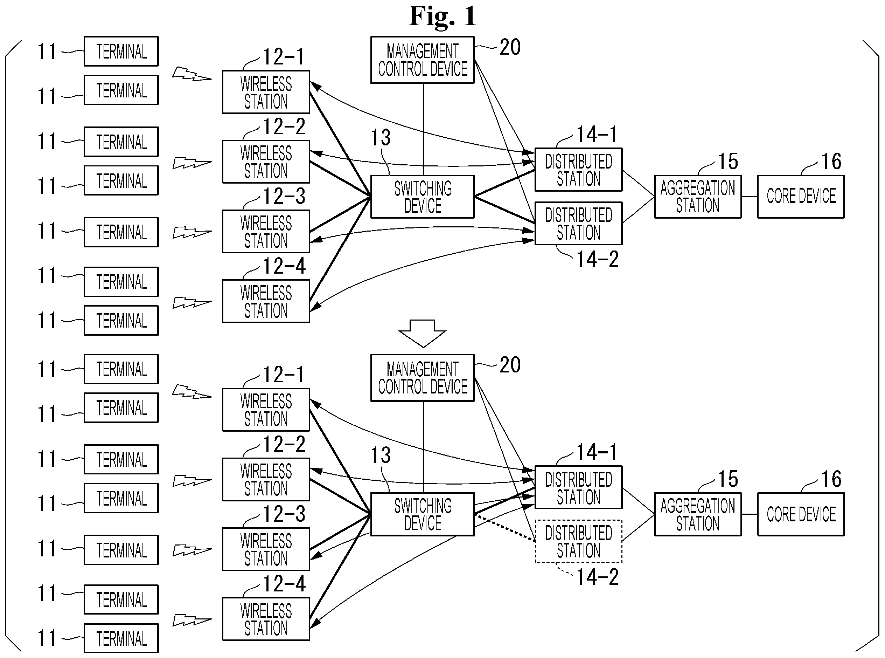

Fig. 1 is a diagram for explaining an overall configuration and an outline of processing of a mobile NW system in the present invention. First, an overall configuration of the mobile NW system will be described. The mobile NW system is an example of a communication system. The mobile NW system is, for example, a fifth generation mobile communication system (hereinafter referred to as "5G"). The mobile NW system includes one or more wireless stations 12, a switching device 13, a plurality of distributed stations 14, an aggregation station 15, a core device 16, and a management control device 20.

The wireless stations 12 and the switching device 13 are connected to each other, the switching device 13 and the distributed stations 14 are connected to each other, the distributed stations 14 and the aggregation station 15 are connected to each other, and the aggregation station 15 and the core device 16 are connected to each other by an optical fiber that transmits an optical signal. The switching device 13 and the management control device 20 are connected to each other, and the distributed stations 14 and the management control device 20 are connected to each other by an electric line or an optical fiber that transmits an electrical signal. The example illustrated in Fig. 1 illustrates a case where there are four wireless stations 12 and there are two distributed stations 14. Note that, although a plurality of switching devices 13 may be provided, a case with one switching device will be described as an example in the following explanation.

Each wireless station 12 includes one or more antennas and performs wireless communication with a terminal 11. For example, each wireless station 12 receives a signal sent from the terminal 11 and sends the received signal to the distributed station 14 connected via the switching device 13. Each wireless station 12 sends the signal received via the switching device 13 to the terminal 11. The wireless station 12 is, for example, a radio unit (RU) in the 5G communication standards.

The switching device 13 is provided between the wireless stations 12 and the distributed stations 14. The switching device 13 switches an optical path in accordance with an instruction from the management control device 20. The optical path is a route of an optical signal. The switching device 13 switches connection between the wireless stations 12 and the distributed stations 14 by switching the optical path.

The distributed station 14 receives an uplink signal sent by the wireless station 12 via the switching device 13. The distributed station 14 sends a downlink signal to the wireless station 12 via the switching device 13. Note that the uplink signal is a signal sent by the terminal 11, and the downlink signal is a signal addressed to the terminal 11. Each distributed station 14 transitions to a sleep state in accordance with an instruction from the management control device 20. The sleep state is a state in which power saving can be achieved by stopping some functions. The distributed station 14 is, for example, a distributed unit (DU) in the 5G communication standards. Information acquired by the management control device 20 from the distributed station 14 is referred to as cooperation information. The cooperation information is information indicating a state of communication between each distributed station 14 and the terminal 11.

The cooperation information includes, for example, information regarding the number of terminals 11 accommodated in each distributed station 14 (hereinafter, "the number of accommodated terminals"). The cooperation information includes, for example, the maximum number of accommodated terminals of the distributed station 14. The maximum number of accommodated terminals of the distributed station 14 is the maximum number that can be accommodated in the distributed station 14. The cooperation information includes, for example, information on the wireless station 12 to which the distributed station 14 on the optical path is connected (hereinafter referred to as "connected wireless station information"). The cooperation information includes, for example, information regarding the processing load of the distributed station 14 (hereinafter referred to as "processing load information"). The processing load information may be, for example, information on a usage rate of a memory of the distributed station 14 or information on a usage rate of a central processing unit (CPU). The cooperation information includes, for example, information regarding a processing delay for each distributed station 14 (hereinafter referred to as "processing delay information"). The cooperation information includes, for example, information regarding a transmission delay between the terminal 11 and each distributed station 14 (hereinafter referred to as "delay information").

The aggregation station 15 aggregates the uplink signals sent by the respective distributed stations 14. The aggregation station 15 allocates the downlink signals. The aggregation station 15 is, for example, a centralized unit (CU) in the 5G communication standards.

The core device 16 executes signal processing on the uplink signals aggregated by the aggregation station 15. The core device 16 sends a signal obtained as a result of executing the signal processing on the uplink signal to an external network. The core device 16 receives a signal from an external network.

The core device 16 performs predetermined signal processing specified in advance on a signal received from an external network. The core device 16 sends a signal obtained as a result of executing the signal processing on a signal received from an external network, to the aggregation station 15 as a downlink signal. The signal processing is, for example, transfer of user data in the user plane function (UPF) of the 5G core network.

The management control device 20 acquires the cooperation information from the distributed station 14. The management control device 20 verifies requirements for optical path switching and sleep control on the basis of the acquired cooperation information. The management control device 20 performs an optical path switching control process and a sleep control process when it is determined that optical path switching and sleep control are required. The optical path switching control process is a process of causing switching of the optical path between the wireless station 12 and the distributed station 14. For example, the management control device 20 instructs the switching device 13 to control switching of the optical path between the wireless station 12 and the distributed station 14. The sleep control process is a process of causing execution of sleep or cancellation of sleep in the distributed station 14.

Next, an outline of processing of the mobile NW system will be described.

The upper diagram of Fig. 1 represents a connection state of the mobile NW system before optical path switching, and the lower diagram of Fig. 1 represents a connection state of the mobile NW system after optical path switching. The upper diagram of Fig. 1 illustrates an example in which the wireless stations 12-1 and 12-2 are connected to the distributed station 14-1, and the wireless stations 12-3 and 12-4 are connected to the distributed station 14-2.

The management control device 20 determines whether or not to perform the optical path switching control process, on the basis of the cooperation information collected from each distributed station 14. The management control device 20 determines to perform the optical path switching control process when there is the distributed station 14 that is allowed to transition to the sleep state. The distributed station 14 that is allowed to transition to the sleep state is, for example, the distributed station 14 that does not accommodate the terminal 11.

On the other hand, when there is no distributed station 14 that is allowed to transition to the sleep state, the management control device 20 determines not to perform the optical path switching control process. When determining to perform the optical path switching control process, the management control device 20 instructs the switching device 13 to switch the optical path. The switching device 13 switches the optical path between the wireless station 12 and the distributed station 14 in accordance with an instruction from the management control device 20. The switching device 13 notifies the management control device 20 of the completion of the optical path switching after the optical path switching has been completed.

When receiving the notification of the completion of the optical path switching from the switching device 13, the management control device 20 sends a sleep permission notification to the distributed station 14 that is allowed to transition to the sleep state. The sleep permission notification is a signal including an instruction for causing the distributed station 14 to transition to the sleep state. This prompts the distributed station 14 that is allowed to transition to the sleep state to transition to the sleep state.

The lower diagram of Fig. 1 illustrates an example in which the wireless stations 12-1 to 12-4 are connected to the distributed station 14-1 and the distributed station 14-2 has transitioned to the sleep state. In this manner, in the mobile NW system 100, the terminal 11 connected to the distributed station 14 that is allowed to transition to the sleep state is connected to another distributed station 14 on the basis of the cooperation information collected from each distributed station 14, whereby the distributed station 14 that is allowed to transition to the sleep state is caused to transition to the sleep state. Hereinafter, the distributed station 14 that is allowed to transition to the sleep state will be expressed as a switching source distributed station, and the distributed station 14 that is a new connection destination of the terminal 11 connected to the switching source distributed station will be expressed as a switching destination distributed station.

### (First Embodiment)

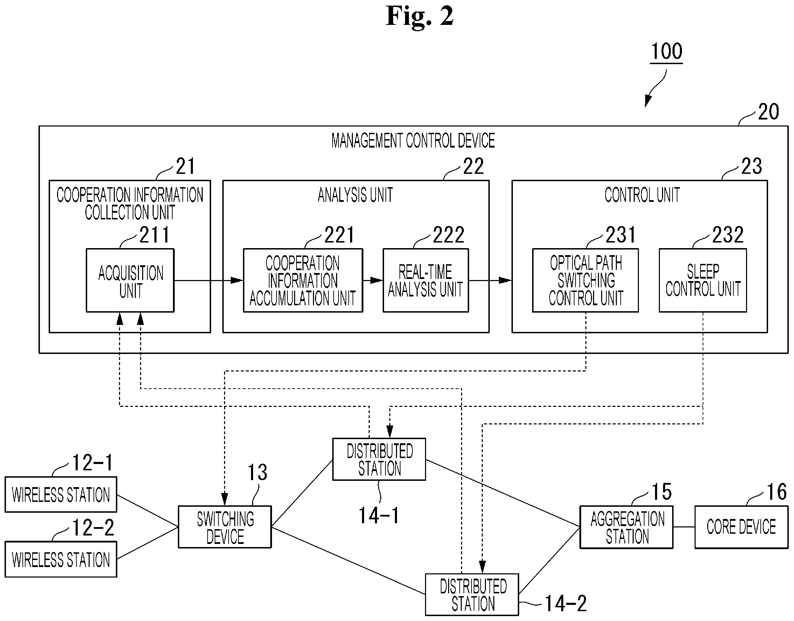

Fig. 2 is a diagram illustrating a configuration example of a mobile NW system 100 in a first embodiment. The mobile NW system 100 in the first embodiment includes one or more wireless stations 12, a switching device 13, a plurality of distributed stations 14, an aggregation station 15, a core device 16, and a management control device 20. Since the wireless station 12, the switching device 13, the distributed station 14, the aggregation station 15, and the core device 16 have been described with reference to Fig. 1, the description thereof will be omitted. The management control device 20 includes a cooperation information collection unit 21, an analysis unit 22, and a control unit 23.

The cooperation information collection unit 21 includes an acquisition unit 211. The acquisition unit 211 collects the cooperation information from the distributed stations 14 at a predetermined cycle.

The analysis unit 22 includes a cooperation information accumulation unit 221 and a real-time analysis unit 222. The cooperation information accumulation unit 221 records the collected cooperation information in a predetermined storage device. The real-time analysis unit 222 analyzes a state of communication between each distributed station 14 and the terminal 11, such as the amount of change in the number of connections of the distributed station 14 per unit time, on the basis of the cooperation information. Specifically, the real-time analysis unit 222 verifies requirements for optical path switching and sleep control on the basis of the cooperation information.

For example, in a case where all the terminals 11 accommodated in the switching source distributed station can be accommodated in another distributed station 14, the real-time analysis unit 222 determines that optical path switching and sleep control are required. In this case, the real-time analysis unit 222 notifies the control unit 23 of information indicating the distributed station 14 that is a switching destination of the optical path and information indicating the distributed station 14 that is an object to be caused to sleep.

For example, in a case where the number of terminals 11 accommodated in the distributed station 14 exceeds the maximum number of accommodated terminals, the real-time analysis unit 222 determines that optical path switching and sleep control are required. In this case, the real-time analysis unit 222 notifies the control unit 23 of information indicating the distributed station 14 that is a switching destination of the optical path and information indicating the distributed station 14 that is an object to be subjected to cancellation of sleep.

The control unit 23 includes an optical path switching control unit 231 and a sleep control unit 232. The optical path switching control unit 231 designates the distributed station 14 that is a switching destination of the optical path on the basis of the result of analysis by the real-time analysis unit 322 and instructs the switching device 13 to switch the optical path. For example, the optical path switching control unit 231 designates the distributed station 14 that is a switching destination of the optical path on the basis of the information indicating the distributed station 14 that is a switching destination of the optical path, which has been notified by the real-time analysis unit 222.

The sleep control unit 232 causes the distributed station 14 to execute sleep or cancel sleep on the basis of the result of analysis by the real-time analysis unit 322.

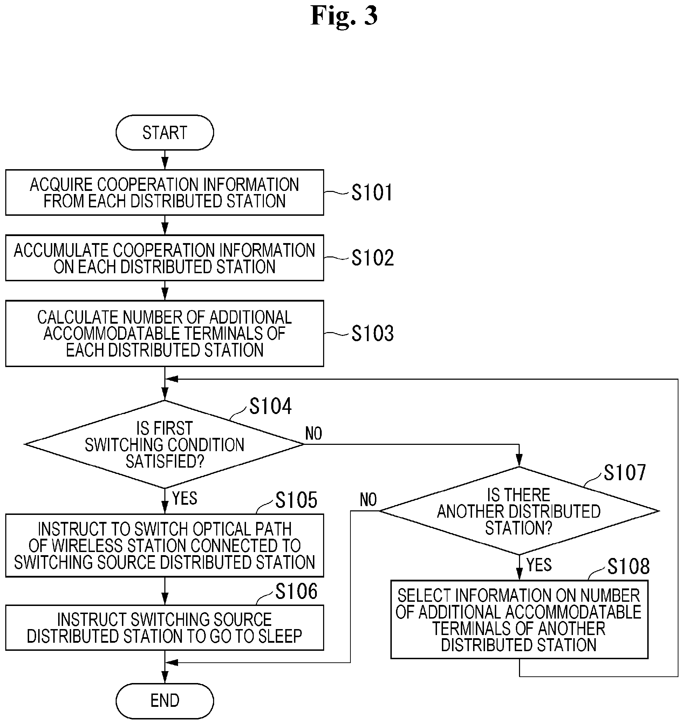

Fig. 3 is a flowchart illustrating an example of a flow of a sleep process executed by the management control device 20 in the first embodiment. In Fig. 3, a case where the cooperation information includes at least information on the number of accommodated terminals and information on the maximum number of accommodated terminals of each distributed station 14 will be described as an example. The flow of the process in Fig. 3 is repeatedly executed at a predetermined cycle.

The acquisition unit 211 acquires the cooperation information from each distributed station 14 (step S101). The acquisition unit 211 accumulates the acquired cooperation information for each distributed station 14 in the cooperation information accumulation unit 221 (step S102). The real-time analysis unit 222 calculates the number of additional accommodatable terminals of each distributed station 14 on the basis of the cooperation information for each distributed station 14 accumulated in the cooperation information accumulation unit 221 (step S103). Here, the number of additional accommodatable terminals represents the number of terminals 11 that can be additionally accommodated apart from the number of terminals currently accommodated in the distributed station 14. For example, the number of additional accommodatable terminals is obtained by subtracting the number of accommodated terminals from the maximum number of accommodated terminals.

The real-time analysis unit 222 determines whether or not a first switching condition is satisfied (step S104). The first switching condition is a condition indicating that switching of the optical path between the wireless station 12 and the distributed station 14 is required and is, for example, that the number of additional accommodatable terminals of a certain distributed station 14 is larger than the number of accommodated terminals of the distributed station 14 that is an object to be subjected to sleep judgment.

When determining that the first switching condition is satisfied (step S104 - YES), the real-time analysis unit 222 notifies the control unit 23 of an optical path switching instruction and a sleep control instruction. The optical path switching control unit 231 instructs the switching device 13 to switch the optical path of the wireless station 12 connected to the switching source distributed station on the basis of the optical path switching instruction notified by the real-time analysis unit 222 (step S105). Specifically, the optical path switching control unit 231 instructs such that the optical path of the wireless station 12 connected to the switching source distributed station is directed to the switching destination distributed station.

The sleep control unit 232 sends the sleep permission notification to the switching source distributed station (step S106). For example, the sleep control unit 232 may send a sleep instruction to the switching source distributed station when an optical path switching completion notification has been obtained from the wireless station 12 connected to the switching source distributed station, and the switching destination distributed station. The optical path switching completion notification is a signal including the content indicating that switching of the optical path has been completed. This allows the switching source distributed station to transition to the sleep state.

When determining that the first switching condition is not satisfied in the process in step S104 (step S104 - NO), the real-time analysis unit 222 determines whether or not there is another distributed station 14 (step S107). Another distributed station 14 is, for example, the distributed station 14 that has not been compared with the distributed station 14 that is an object to be subjected to sleep judgment. When determining that there is no other distributed station 14 (step S107 - NO), the real-time analysis unit 222 ends the process.

On the other hand, when determining that there is another distributed station 14 (step S107 - YES), the real-time analysis unit 222 selects information on the number of additional accommodatable terminals of the another distributed station 14 (step S108). The real-time analysis unit 222 executes the process in step S104 again, using the selected information on the number of additional accommodatable terminals of the another distributed station 14.

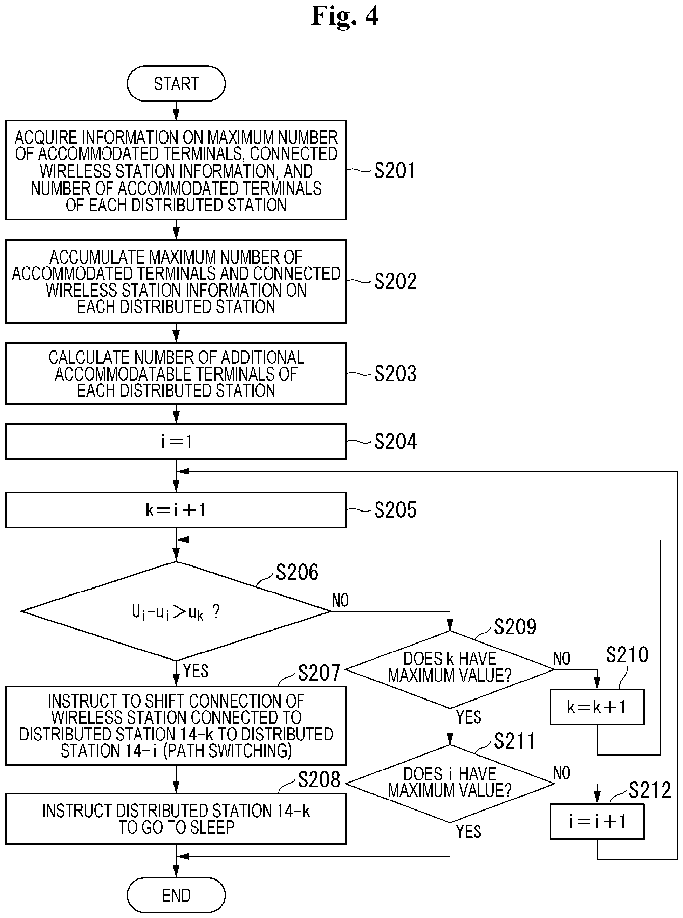

Fig. 4 is a flowchart illustrating an example of a flow of the sleep process executed by the management control device 20 in the first embodiment. Note that, in the process illustrated in Fig. 4, more specifically illustrated contents of the process illustrated in Fig. 3 will be described.

The acquisition unit 211 acquires, from each distributed station 14, the information on the maximum number of accommodated terminals, the connected wireless station information, and the number of accommodated terminals of each distributed station, as the cooperation information (step S201).

The acquisition unit 211 accumulates the acquired cooperation information for each distributed station 14 in the cooperation information accumulation unit 221 (step S202). The real-time analysis unit 222 calculates the number of additional accommodatable terminals of each distributed station 14 on the basis of the cooperation information for each distributed station 14 accumulated in the cooperation information accumulation unit 221 (step S203). Next, the real-time analysis unit 222 substitutes a value of 1 for a constant i (step S204). For example, i represents the distributed station 14-i that is a switching destination. When i = 1 holds, the distributed station 14-1 is the switching destination distributed station. The constant i has a value of 1 ≤ i ≤ I. I denotes the total number of distributed stations 14.

Next, the real-time analysis unit 222 substitutes a value of (i+1) for k (step S205). For example, k represents the distributed station 14-k that is a switching source. When k = 2 (i = 1) holds, the distributed station 14-2 is the switching source distributed station. The element k has a value of 2 ≤ k ≤ K. K denotes the total number - 1 of the distributed stations 14, that is, has K = (I - 1).

Thereafter, the real-time analysis unit 222 determines whether or not Uᵢ - uᵢ > uₖ is satisfied (step S206). Uᵢ represents the maximum number of accommodated terminals of the distributed station 14-i, uᵢ represents the number of accommodated terminals of the distributed station 14-i, and uₖ represents the number of accommodated terminals of the distributed station 14-k. The condition indicated by Uᵢ - uᵢ > uₖ is a specific example of the first switching condition. Here, as an example, it is assumed that the maximum number of accommodated terminals of the distributed station 14-1 is 1000, the number of accommodated terminals of the distributed station 14-1 is 100, the maximum number of accommodated terminals of the distributed station 14-2 is 800, and the number of accommodated terminals of the distributed station 14-2 is 200.

A case where i = 1 and k = 2 hold is represented as follows.
- U₁ - u₁ ⇒ 1000 - 100 = 900

Grounded on the above results, U₁ - u₁ > u₂ has 900 > 200, and the first switching condition is satisfied. When determining that the first switching condition (for example, Uᵢ - uᵢ > uₖ) is satisfied (step S206 - YES), the real-time analysis unit 222 notifies the control unit 23 of the optical path switching instruction and the sleep control instruction.

The optical path switching control unit 231 instructs the switching device 13 to switch the optical path of the wireless station 12 connected to the distributed station 14-k on the basis of the optical path switching instruction notified by the real-time analysis unit 222 (step S207). Specifically, the optical path switching control unit 231 instructs such that the optical path of the wireless station 12 connected to the distributed station 14-k (for example, the distributed station 14-2) is directed to the distributed station 14-i (for example, the distributed station 14-1) as the switching destination distributed station. The sleep control unit 232 sends the sleep permission notification to the distributed station 14-k (for example, the distributed station 14-2) (step S208).

Meanwhile, a case will be considered as an example in which the maximum number of accommodated terminals of the distributed station 14-1 is 1000, the number of accommodated terminals of the distributed station 14-1 is 500, the maximum number of accommodated terminals of the distributed station 14-2 is 800, and the number of accommodated terminals of the distributed station 14-2 is 700. A case where i = 1 and k = 2 hold is represented as follows.
- U₁ - u₁ ⇒ 1000 - 500 = 500

Grounded on the above result, U₁ - u₁ > u₂ will have 500 < 700, and the first switching condition is not satisfied. When determining that the first switching condition (for example, Uᵢ - uᵢ > uₖ) is not satisfied (step S206 - NO), the real-time analysis unit 222 determines whether or not k has the maximum value (step S209).

When determining that k does not have the maximum value (step S209 - NO), the real-time analysis unit 222 adds a value of 1 to the value of k (step S210). Thereafter, the real-time analysis unit 222 executes the process in step S206 again. For example, as in the above-described example, when i = 1 and k = 2 hold and k does not have the maximum value, the real-time analysis unit 222 adds a value of 1 to the value of k to obtain k = 3. Then, the real-time analysis unit 222 determines whether or not U₁ - u₁ > u₃ is satisfied.

On the other hand, when determining that k has the maximum value (step S209 - YES), the real-time analysis unit 222 determines whether or not i has the maximum value (step S211). When determining that i has the maximum value (step S211 - YES), the real-time analysis unit 222 ends the process.

On the other hand, when determining that i does not have the maximum value (step S211 - NO), the real-time analysis unit 222 adds a value of 1 to the value of i (step S212). Thereafter, the real-time analysis unit 222 executes the process in step S205 again. For example, when i = 1 and k = 3 hold, k has the maximum value, and i does not have the maximum value, the real-time analysis unit 222 adds a value of 1 to the value of i to obtain i = 2.

Then, the real-time analysis unit 222 substitutes the value of (i+1) for k in the process in step S205 (step S205). In this case, i = 2 and k = 3 are obtained. Thereafter, the real-time analysis unit 222 determines whether or not U₂ - u₂ > u₃ is satisfied in the process in step S206.

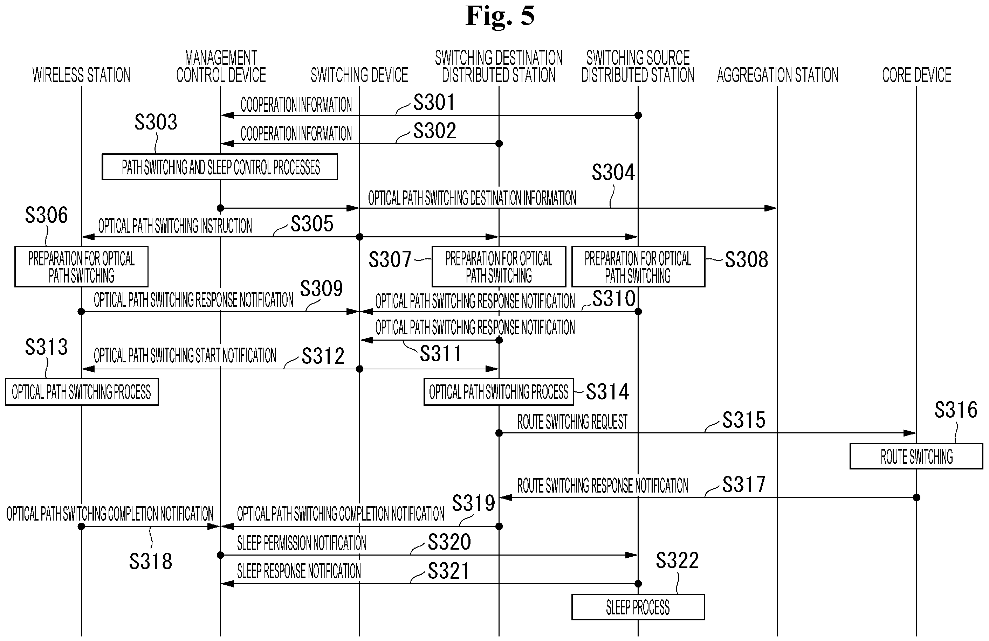

Fig. 5 is a sequence diagram illustrating an example of a detailed flow of a sleep process executed by the mobile NW system 100 in the first embodiment. Note that, in the description of Fig. 5, it is assumed that the distributed station 14-1 is a switching destination distributed station and the distributed station 14-2 is a switching source distributed station. Here, expressions of the switching destination distributed station 14-1 and the switching source distributed station 14-2 will be employed for description.

The acquisition unit 211 of the management control device 20 acquires the cooperation information from the switching destination distributed station 14-1 and the switching source distributed station 14-2 at a predetermined cycle (step S301, step S302). The acquisition unit 211 accumulates the acquired cooperation information in the cooperation information accumulation unit 221. When the cooperation information is accumulated in the cooperation information accumulation unit 221, the real-time analysis unit 222 performs judgment on optical path switching and sleep control (step S303).

The judgment on optical path switching and sleep control in step S303 is a determination as to whether or not the first switching condition is satisfied in step S104. Here, it is assumed that the first switching condition in step S104 is satisfied. When the first switching condition is satisfied, the real-time analysis unit 222 instructs the optical path switching control unit 231 to perform optical path switching control and instructs the sleep control unit 232 to perform sleep control.

The optical path switching control unit 231 notifies the switching device 13 and the aggregation station 15 of optical path switching destination information (step S304). The optical path switching destination information is information regarding the switching destination of the optical path. In the example illustrated in Fig. 5, the optical path switching destination information includes information indicating the switching destination distributed station 14-1 as a switching destination of the optical path. When notified of the optical path switching destination information by the management control device 20, the switching device 13 instructs the wireless station 12 connected to the switching source distributed station 14-2, the switching destination distributed station 14-1, and the switching source distributed station 14-2 to switch the optical path (step S305). For example, the switching device 13 instructs the wireless station 12 connected to the switching source distributed station 14-2 to switch the optical path to the switching destination distributed station 14-1, instructs the switching destination distributed station 14-1 to switch such that the optical path is linked to the wireless station 12 connected to the switching source distributed station 14-2, and instructs the switching source distributed station 14-2 not to set any optical path.

The wireless station 12 connected to the switching source distributed station 14-2, the switching destination distributed station 14-1, and the switching source distributed station 14-2 prepare for switching of the optical path (step S306, step S307, and step S308). The wireless station 12 connected to the switching source distributed station 14-2, the switching destination distributed station 14-1, and the switching source distributed station 14-2 send an optical path switching response notification to the switching device 13 (step S309, step S310, and step S311). The optical path switching response notification is a signal including the content indicating that the optical path switching destination information has been received.

When the optical path switching response notification is obtained from the wireless station 12 connected to the switching source distributed station 14-2, the switching destination distributed station 14-1, and the switching source distributed station 14-2, the switching device 13 sends an optical path switching start notification to the wireless station 12 connected to the switching source distributed station 14-2 and the switching destination distributed station 14-1 (step S312). The optical path switching start notification is a signal including a command to cause switching of the optical path to be started.

The wireless station 12 connected to the switching source distributed station 14-2 and the switching destination distributed station 14-1 switch the optical path in response to the reception of the optical path switching start notification (step S313, step S314). With this process, the optical path of the wireless station 12 connected to the switching source distributed station 14-2 is switched so as to be directed to the switching destination distributed station 14-1. That is, the wireless station 12 and the switching destination distributed station 14-1 are put into a communication-enabled state.

The switching destination distributed station 14-1 sends a route switching request to the core device 16 (step S315). The route switching request is a signal including the content requesting switching of a communication route in the core device 16. The core device 16 switches the route in response to the reception of the route switching request (step S316).

When route switching has been completed, the core device 16 sends a route switching response notification to the switching destination distributed station 14-1 (step S317). The route switching response notification is a signal including the content indicating that switching of the communication route in the core device 16 has been completed.

When switching of the optical path has been completed, the wireless station 12 sends the optical path switching completion notification to the management control device 20 (step S318). The optical path switching completion notification is a signal including the content indicating that switching of the optical path has been completed. When switching of the optical path has been completed, the switching destination distributed station 14-1 sends the optical path switching completion notification to the management control device 20 (step S319).

When the optical path switching completion notification is received from the sending destinations of the optical path switching start notification, the sleep control unit 232 sends the sleep permission notification to the switching source distributed station 14-2 (step S320). When obtaining the sleep permission notification from the management control device 20, the switching source distributed station 14-2 sends a sleep response notification to the management control device 20 (step S321). The sleep response notification is a signal including the content indicating that the sleep permission notification has been received. After sending the sleep response notification, the switching source distributed station 14-2 transitions to the sleep state (step S322).

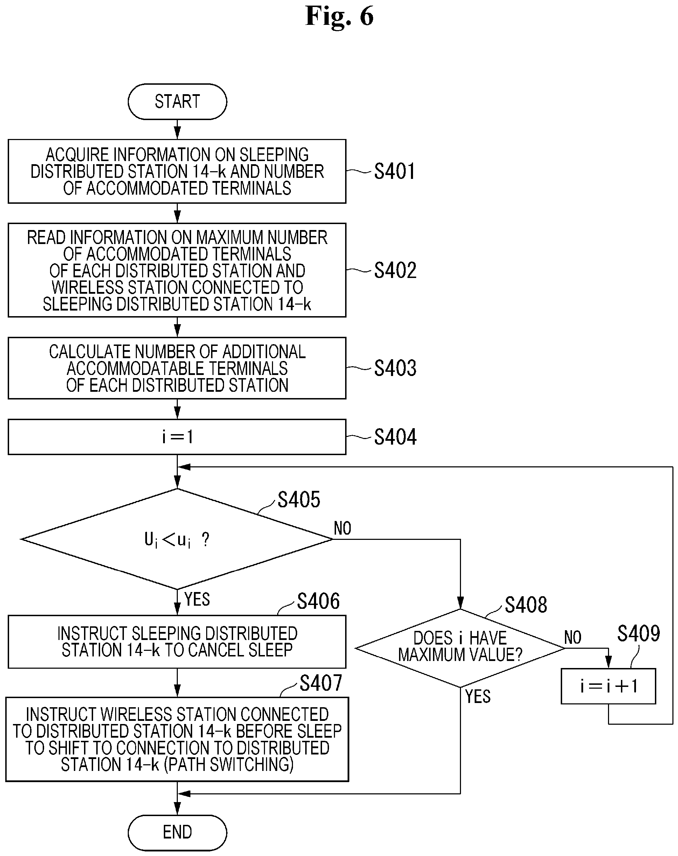

Fig. 6 is a flowchart illustrating an example of a flow of a sleep cancellation process executed by the management control device 20 in the first embodiment. The acquisition unit 211 acquires information on the number of accommodated terminals and the sleeping distributed station 14-k from each distributed station 14 as the cooperation information (step S401). The acquisition unit 211 notifies the analysis unit 22 of the acquired information on the number of accommodated terminals and the sleeping distributed station 14-k.

The real-time analysis unit 222 reads information on the maximum number of accommodated terminals of each distributed station 14 and information on the wireless station 12 connected to the sleeping distributed station 14-k from the cooperation information accumulation unit 221 (step S402). The real-time analysis unit 222 calculates the number of additional accommodatable terminals of each distributed station 14 on the basis of the cooperation information for each distributed station 14 accumulated in the cooperation information accumulation unit 221 (step S403).

Next, the real-time analysis unit 222 substitutes a value of 1 for the constant i (step S404). The real-time analysis unit 222 determines whether or not Uᵢ < uᵢ is satisfied (step S405). The condition indicated by Uᵢ < uᵢ is a specific example of a first sleep cancellation condition. When determining that the first sleep cancellation condition (for example, Uᵢ < uᵢ) is satisfied (step S405 - YES), the real-time analysis unit 222 determines that sleep cancellation of the sleeping distributed station 14-k and switching of the optical path are required.

The real-time analysis unit 222 notifies the control unit 23 of the determination result. The sleep control unit 232 sends an instruction to cancel the sleep to the sleeping distributed station 14-k on the basis of the determination result (step S406). The optical path switching control unit 231 acquires information on the wireless station 12 connected to the distributed station 14-k before sleep from the information acquired in the process in step S402. The optical path switching control unit 231 instructs the wireless station 12 connected to the distributed station 14-k before sleep to shift to the connection to the distributed station 14-k.

Where determining that the first sleep cancellation condition (for example, Uᵢ < uᵢ) is not satisfied in the process in step S405 (step S405 - NO), the real-time analysis unit 222 determines whether or not i has the maximum value (step S408). When determining that i has the maximum value (step S408 - YES), the real-time analysis unit 222 ends the process.

On the other hand, when determining that i does not have the maximum value (step S408 - NO), the real-time analysis unit 222 adds a value of 1 to the value of i (step S409). Thereafter, the real-time analysis unit 222 executes the process in step S405 again.

Here, the process in Fig. 6 will be described using specific numerical values. As an example, it is assumed that the total number of the distributed stations 14 is 2 (I = 2), the maximum number of accommodated terminals of the distributed station 14-1 is 1000, the number of accommodated terminals of the distributed station 14-1 is 800, the maximum number of accommodated terminals of the distributed station 14-2 is 800, and the number of accommodated terminals of the distributed station 14-2 is 1000.

When i = 1 holds, U₁ < u₁ has 1000 > 800, and the first sleep cancellation condition is not satisfied. When determining that the first sleep cancellation condition (for example, Uᵢ < uᵢ) is not satisfied (step S405 - NO), the real-time analysis unit 222 determines whether or not i has the maximum value (step S408). Since i = 1 holds at present, the real-time analysis unit 222 determines that i does not have the maximum value.

The real-time analysis unit 222 adds a value of 1 to the value of i to obtain i = 2. The real-time analysis unit 222 executes the process in step S405 again. When i = 2 holds, U₂ < u₂ has 800 < 1000, and the first sleep cancellation condition is satisfied. Thereafter, the processes in steps S406 and S407 are executed.

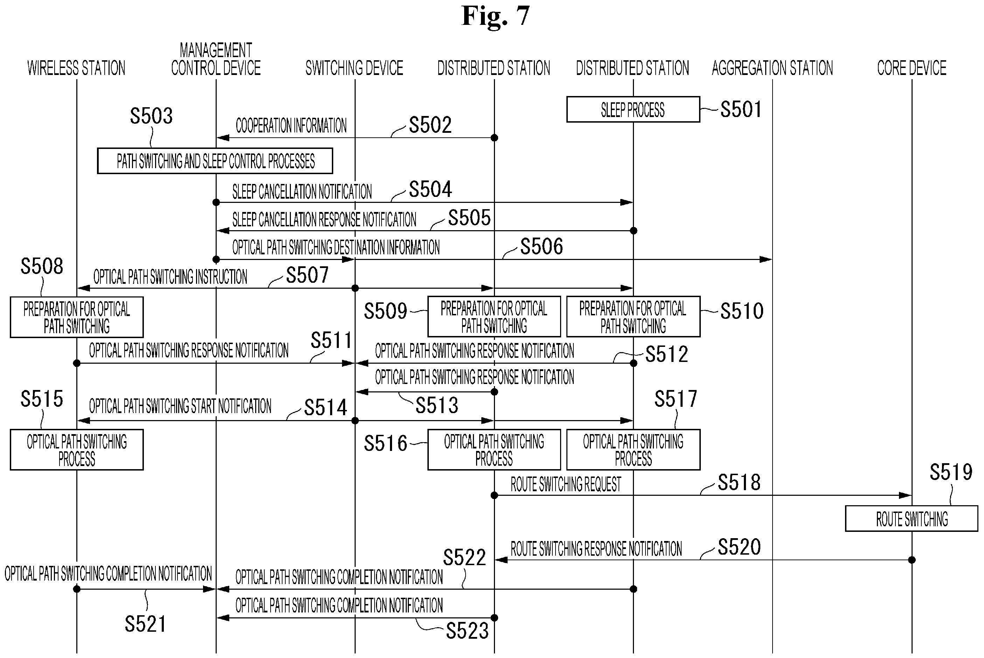

Fig. 7 is a sequence diagram illustrating an example of a detailed flow of the sleep cancellation process executed by the mobile NW system 100 in the first embodiment. Note that, in the description of Fig. 7, it is assumed that the distributed station 14-2 is in the sleep state.

The distributed station 14-2 is in the sleep state (step S501). The acquisition unit 211 of the management control device 20 acquires the cooperation information from the distributed station 14-1 at a predetermined cycle (step S502). The acquisition unit 211 accumulates the acquired cooperation information in the cooperation information accumulation unit 221. When the cooperation information is accumulated in the cooperation information accumulation unit 221, the real-time analysis unit 222 performs judgment on optical path switching and sleep control (step S503). The judgment on optical path switching and sleep control in step S503 is relevant to whether or not the sleep cancellation condition is satisfied. Here, it is assumed that the sleep cancellation condition is satisfied.

The sleep control unit 232 of the management control device 20 sends a sleep cancellation notification to the distributed station 14-2 (step S504). The sleep cancellation notification is a signal including the content indicating that the sleep state is to be cancelled. In response to the reception of the sleep cancellation notification, the distributed station 14-2 sends a sleep cancellation response notification to the management control device 20 (step S505). The sleep cancellation response notification is a signal including the content indicating that the sleep cancellation notification has been received.

The optical path switching control unit 231 notifies the switching device 13 and the aggregation station 15 of the optical path switching destination information (step S506). When notified of the optical path switching destination information by the management control device 20, the switching device 13 instructs the wireless station 12, the distributed station 14-1, and the distributed station 14-2 to switch the optical path (step S507).

The wireless station 12, the distributed station 14-1, and the distributed station 14-2 prepare for switching of the optical path (step S508, step S509, and step S510). When the preparation for switching the optical path has been completed, the wireless station 12, the distributed station 14-1, and the distributed station 14-2 send the optical path switching response notification indicating that the preparation for switching has been completed to the switching device 13 (step S511, step S512, and step S513).

When the optical path switching response notification is obtained from the wireless station 12, the distributed station 14-1, and the distributed station 14-2, the switching device 13 sends the optical path switching start notification to the wireless station 12, the distributed station 14-1, and the distributed station 14-2 (step S514).

The wireless station 12, the distributed station 14-1, and the distributed station 14-2 switch the optical path in response to the reception of the optical path switching start notification (step S515, step S516, and step S517). The distributed station 14-1 sends the route switching request to the core device 16 (step S518). The core device 16 switches the route in response to the reception of the route switching request (step S519). When route switching has been completed, the core device 16 sends the route switching response notification to the distributed station 14-1 (step S520).

When switching of the optical path has been completed, the wireless station 12 sends the optical path switching completion notification to the management control device 20 (step S521). When switching of the optical path has been completed, the distributed station 14-1 sends the optical path switching completion notification to the management control device 20 (step S522). When switching of the optical path has been completed, the distributed station 14-2 sends the optical path switching completion notification to the management control device 20 (step S523).

According to the mobile NW system 100 configured as described above, there are provided one or more wireless stations 12 that perform wireless communication with one or more terminals 11; a plurality of distributed stations 14 connected to the one or more wireless stations 12 via the switching device 13; the cooperation information collection unit 21 that acquires, at a predetermined cycle, the cooperation information indicating a state of communication between the plurality of distributed stations 14 and the one or more terminals 11; the optical path switching control unit 231 that controls switching of an optical path between the one or more wireless stations 12 and the plurality of distributed stations 14 when it is determined, on the basis of the cooperation information, that the switching of the optical path between the one or more wireless stations 12 and the plurality of distributed stations 14 is required; and the sleep control unit 232 that causes each of the distributed stations that can sleep to transition to a sleep state after the switching of the optical path is performed. This ensures that the optical path switching and the sleep control are performed while the load of each distributed station 14 is analyzed. Therefore, an effect of power saving can be increased without involving deterioration of the communication quality.

### (Modification 1 of First Embodiment)

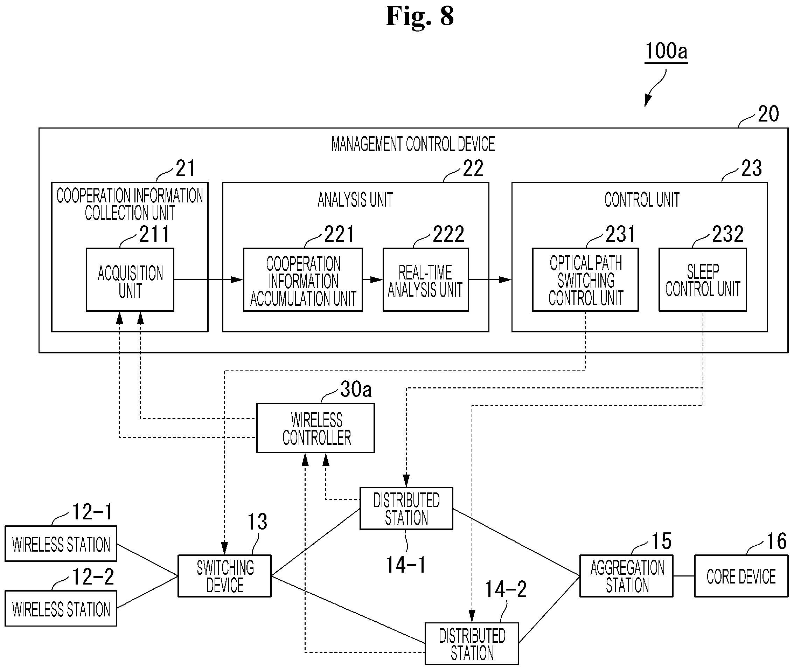

In the above-described embodiment, a configuration in which the management control device 20 directly acquires the cooperation information from the distributed station 14 has been illustrated. The management control device 20 may acquire the cooperation information through another device. Here, the another device is, for example, a wireless controller. Fig. 8 is a diagram illustrating a configuration example of a mobile NW system 100a in Modification 1 of the first embodiment. The mobile NW system 100a includes one or more wireless stations 12, a switching device 13, a plurality of distributed stations 14, an aggregation station 15, a core device 16, a management control device 20, and a wireless controller 30a. As illustrated in Fig. 8, in the mobile NW system 100a, the wireless controller 30a is provided between the management control device 20 and the distributed stations 14.

The wireless controller 30a acquires the cooperation information from each distributed station 14 at a predetermined cycle by wireless communication. The wireless controller 30a sends the acquired cooperation information to the management control device 20 by wireless communication. Note that the wireless controller 30a may receive a sleep control instruction from the management control device 20 and send the received sleep control instruction to the switching source distributed station.

With this configuration, the cooperation information can be collected by wireless communication.

### (Modification 2 of First Embodiment)

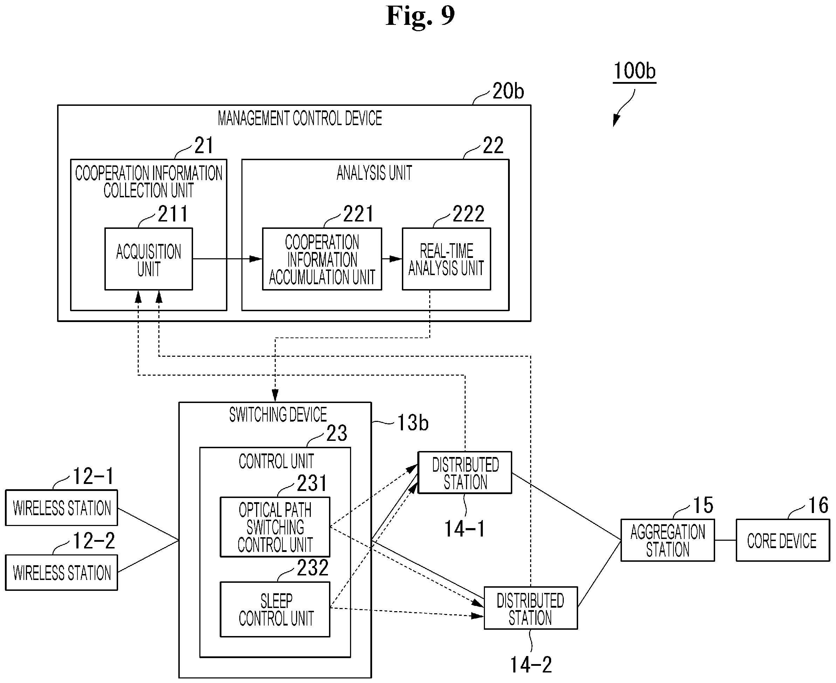

In the above-described embodiment, a configuration in which the management control device 20 performs the optical path switching control process and the sleep control process has been illustrated. In contrast to this, the switching device 13 may be configured to perform the optical path switching control process and the sleep control process. Fig. 9 is a diagram illustrating a configuration example of a mobile NW system 100b in Modification 2 of the first embodiment. The mobile NW system 100b includes one or more wireless stations 12, a switching device 13b, a plurality of distributed stations 14, an aggregation station 15, a core device 16, and a management control device 20b.

As illustrated in Fig. 9, the switching device 13b includes the control unit 23, and the management control device 20b does not include the control unit 23. A real-time analysis unit 222 of the management control device 20b notifies the switching device 13b of the analysis result. Note that the real-time analysis unit 222 may notify the switching device 13b of the analysis result only when optical path switching and sleep control are to be performed. The control unit 23 of the switching device 13b performs the optical path switching control process and the sleep control process on the basis of the analysis result notified by the management control device 20b.

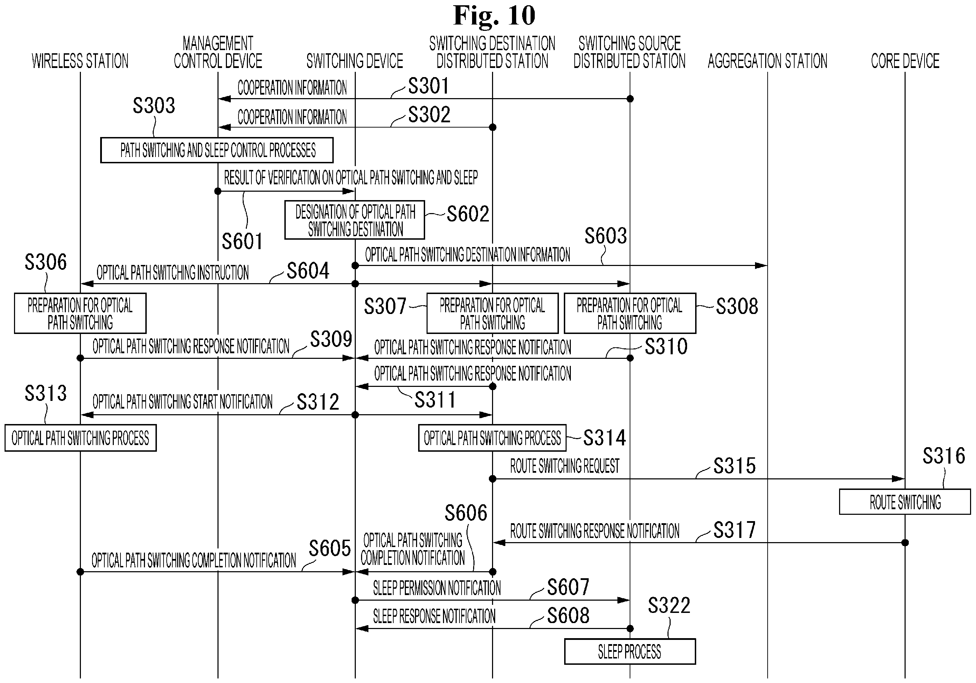

Fig. 10 is a sequence diagram illustrating an example of a detailed flow of a sleep process executed by the mobile NW system 100b in Modification 2 of the first embodiment. In Fig. 10, the same processes as the processes in Fig. 5 will be given the same reference signs as the reference signs in Fig. 5, and description thereof will be omitted. Note that, in the description of Fig. 10, it is assumed that the distributed station 14-1 is a switching destination distributed station and the distributed station 14-2 is a switching source distributed station. Here, expressions of the switching destination distributed station 14-1 and the switching source distributed station 14-2 will be employed for description.

After the processes from step S301 to step S303 are executed, the real-time analysis unit 222 instructs the switching device 13b to perform optical path switching control and sleep control when the first switching condition is satisfied (step S601). The switching device 13b receives the instruction sent from the management control device 20b.

An optical path switching control unit 231 of the switching device 13b designates the switching destination of the optical path from the information included in the received instruction (step S602). The optical path switching control unit 231 notifies the aggregation station 15 of the optical path switching destination information (step S603). Thereafter, the optical path switching control unit 231 instructs the wireless station 12 connected to the switching source distributed station 14-2, the switching destination distributed station 14-1, and the switching source distributed station 14-2 to switch the optical path (step S604). Thereafter, the processes from step S306 to step S317 are executed.

When switching of the optical path has been completed, the wireless station 12 sends the optical path switching completion notification to the switching device 13b (step S605). Note that the wireless station 12 may also send the optical path switching completion notification to the management control device 20b. When switching of the optical path has been completed, the switching destination distributed station 14-1 sends the optical path switching completion notification to the switching device 13b (step S606). Note that the switching destination distributed station 14-1 may also send the optical path switching completion notification to the management control device 20b.

When the optical path switching completion notification is received from the sending destinations of the optical path switching start notification, a sleep control unit 232 included in the switching device 13b sends the sleep permission notification to the switching source distributed station 14-2 (step S607). When obtaining the sleep permission notification from the switching device 13b, the switching source distributed station 14-2 sends the sleep response notification to the switching device 13b (step S608). After sending the sleep response notification, the switching source distributed station 14-2 transitions to the sleep state (step S322).

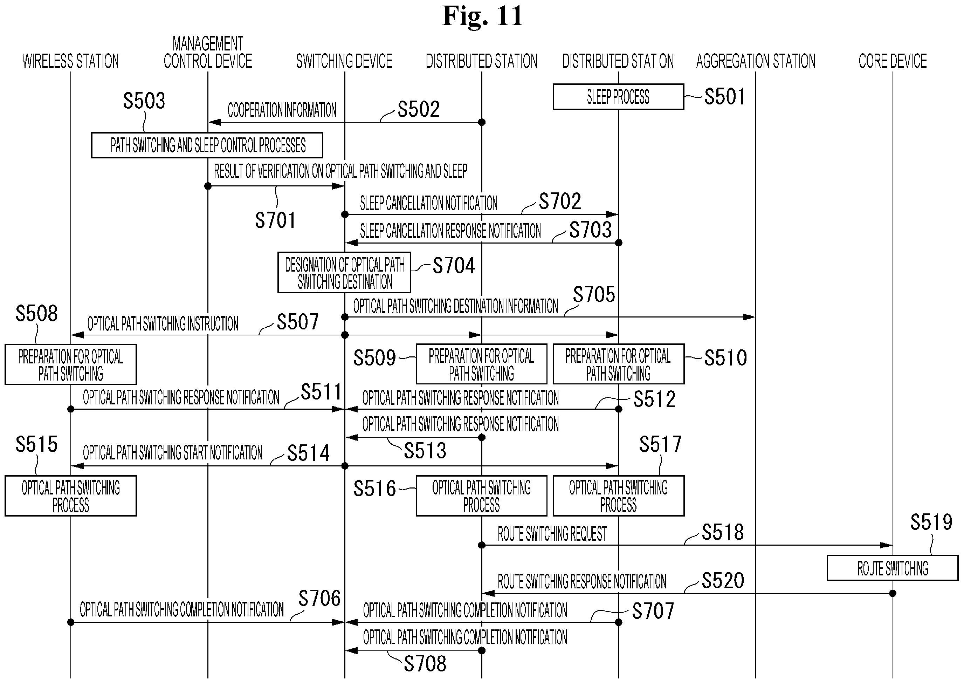

Fig. 11 is a sequence diagram illustrating an example of a detailed flow of a sleep cancellation process executed by the mobile NW system 100b in Modification 2 of the first embodiment. In Fig. 11, the same processes as the processes in Fig. 7 will be given the same reference signs as the reference signs in Fig. 7, and description thereof will be omitted. Note that, in the description of Fig. 11, it is assumed that the distributed station 14-2 is in the sleep state.

After the processes from step S501 to step S503 are executed, the real-time analysis unit 222 instructs the switching device 13b to perform optical path switching control and sleep control when a sleep cancellation condition is satisfied (step S701). The switching device 13b receives the instruction sent from the management control device 20b.

The sleep control unit 232 of the switching device 13b sends the sleep cancellation notification to the distributed station 14-2 on the basis of the information included in the received instruction (step S702). In response to the reception of the sleep cancellation notification, the distributed station 14-2 sends the sleep cancellation response notification to the switching device 13b (step S703).

The optical path switching control unit 231 of the switching device 13b designates the switching destination of the optical path from the information included in the received instruction (step S704). The optical path switching control unit 231 of the switching device 13b notifies the aggregation station 15 of the optical path switching destination information (step S705). Thereafter, the processes from step S507 to step S520 are executed.

When switching of the optical path has been completed, the wireless station 12 sends the optical path switching completion notification to the switching device 13b (step S706). When switching of the optical path has been completed, the distributed station 14-1 sends the optical path switching completion notification to the switching device 13b (step S707). When switching of the optical path has been completed, the distributed station 14-2 sends the optical path switching completion notification to the switching device 13b (step S708).

### (Second Embodiment)

A second embodiment has a configuration different from the configuration of the first embodiment in that processing load information (for example, information on the memory usage rate or information on the CPU usage rate for each distributed station) is further included as the cooperation information. In the second embodiment, as an example of the processing load information, information on the memory usage rate for each distributed station will be described as an example.

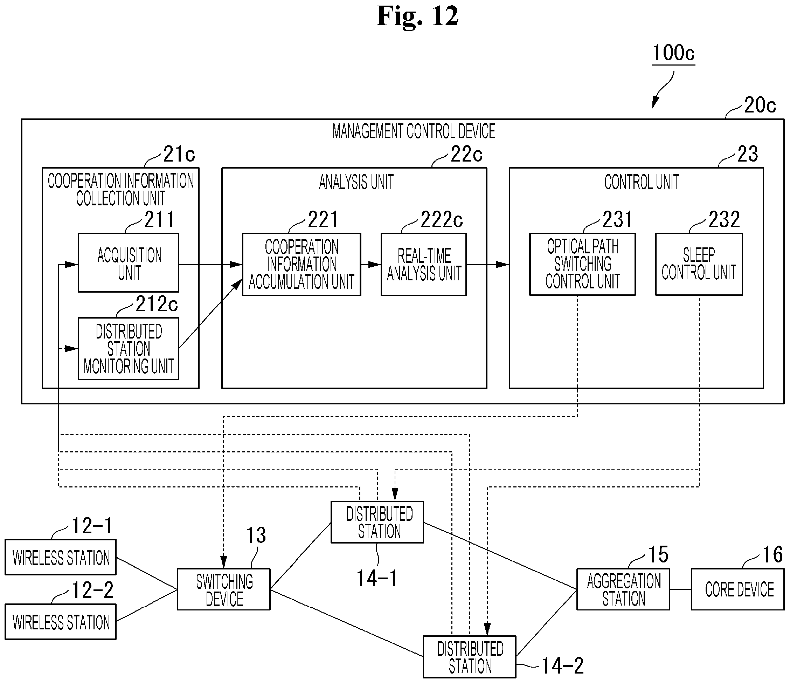

Fig. 12 is a diagram illustrating a configuration example of a mobile NW system 100c in the second embodiment. The mobile NW system 100c in the second embodiment includes one or more wireless stations 12, a switching device 13, a plurality of distributed stations 14, an aggregation station 15, a core device 16, and a management control device 20c. The management control device 20c includes a cooperation information collection unit 21c, an analysis unit 22c, and a control unit 23.

The cooperation information collection unit 21c includes an acquisition unit 211 and a distributed station monitoring unit 212c. The distributed station monitoring unit 212c monitors each distributed station 14 and measures the memory usage rate for each distributed station 14. The distributed station monitoring unit 212c outputs information on the memory usage rate measured for each distributed station 14 to the analysis unit 22c as the cooperation information.

The analysis unit 22c includes a cooperation information accumulation unit 221 and a real-time analysis unit 222c. The real-time analysis unit 222c analyzes the state of communication in the mobile NW system 100c, such as the amount of change in the number of connections of the distributed station 14 per unit time, on the basis of the cooperation information. Specifically, the real-time analysis unit 222c estimates the memory usage rate per accommodated terminal by dividing the memory usage rate by the current number of accommodated terminals. Furthermore, the real-time analysis unit 222c multiplies the number of accommodated terminals of another distributed station 14 by the memory usage rate per accommodated terminal of the object distributed station 14 and, when the memory usage rate does not exceed 100% and the number of accommodated terminals of the another distributed station 14 is smaller than the number of terminals that can be additionally accommodated in the object distributed station 14, verifies optical path switching and sleep.

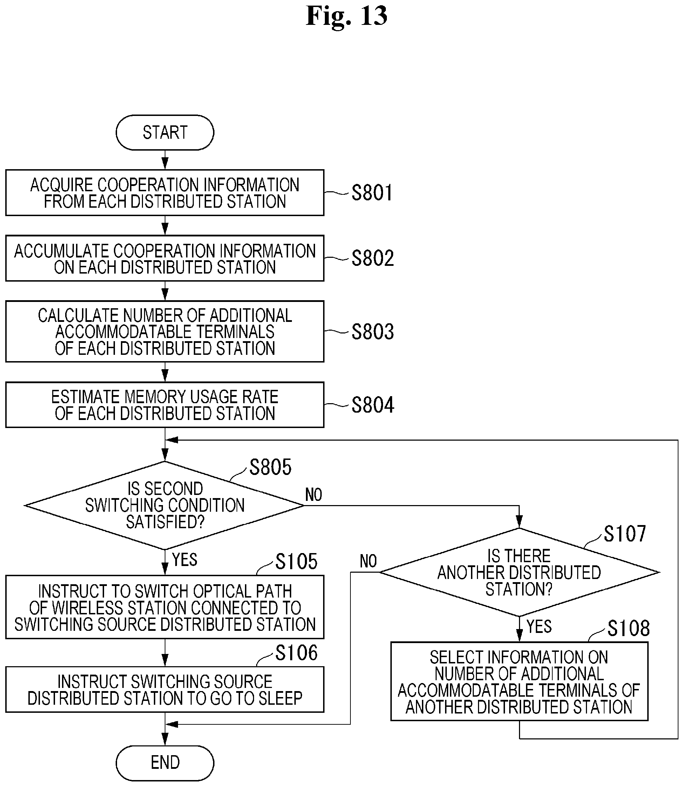

Fig. 13 is a flowchart illustrating an example of a flow of a sleep process executed by the management control device 20c in the second embodiment. In Fig. 13, the same processes as the processes in Fig. 3 will be given the same reference signs as the reference signs in Fig. 3, and description thereof will be omitted.

The cooperation information collection unit 21c acquires the cooperation information from each distributed station 14 (step S801). Specifically, the acquisition unit 211 acquires at least information on the number of accommodated terminals, information on the maximum number of accommodated terminals, and the like as the cooperation information from each distributed station 14. Furthermore, the distributed station monitoring unit 212c measures the memory usage rate for each distributed station 14. The cooperation information collection unit 21c accumulates the acquired cooperation information for each distributed station 14 in the cooperation information accumulation unit 221 (step S802). Specifically, in addition to the cooperation information including at least the information on the number of accommodated terminals, the information on the maximum number of accommodated terminals, and the like, the cooperation information collection unit 21c accumulates information on the memory usage rate for each distributed station 14 in the cooperation information accumulation unit 221 as the cooperation information from each distributed station 14.

The real-time analysis unit 222c calculates the number of additional accommodatable terminals of each distributed station 14 on the basis of the cooperation information for each distributed station 14 accumulated in the cooperation information accumulation unit 221 (step S803). Furthermore, the real-time analysis unit 222c estimates the memory usage rate of each distributed station 14 on the basis of the cooperation information for each distributed station 14 accumulated in the cooperation information accumulation unit 221 (step S804).

The real-time analysis unit 222c determines whether or not a second switching condition is satisfied (step S805). The second switching condition is a condition indicating that switching of the optical path between the wireless station 12 and the distributed station 14 is required and is, for example, that the number of additional accommodatable terminals of a certain distributed station 14 is larger than the number of accommodated terminals of the distributed station 14 that is an object to be subjected to sleep judgment, and that the memory usage rate does not exceed 100%.

When determining that the second switching condition is satisfied (step S805 - YES), the real-time analysis unit 222c executes the processes in step S105 and the subsequent steps. On the other hand, when determining that the second switching condition is not satisfied (step S805 - NO), the real-time analysis unit 222c executes the processes in step S107 and the subsequent steps.

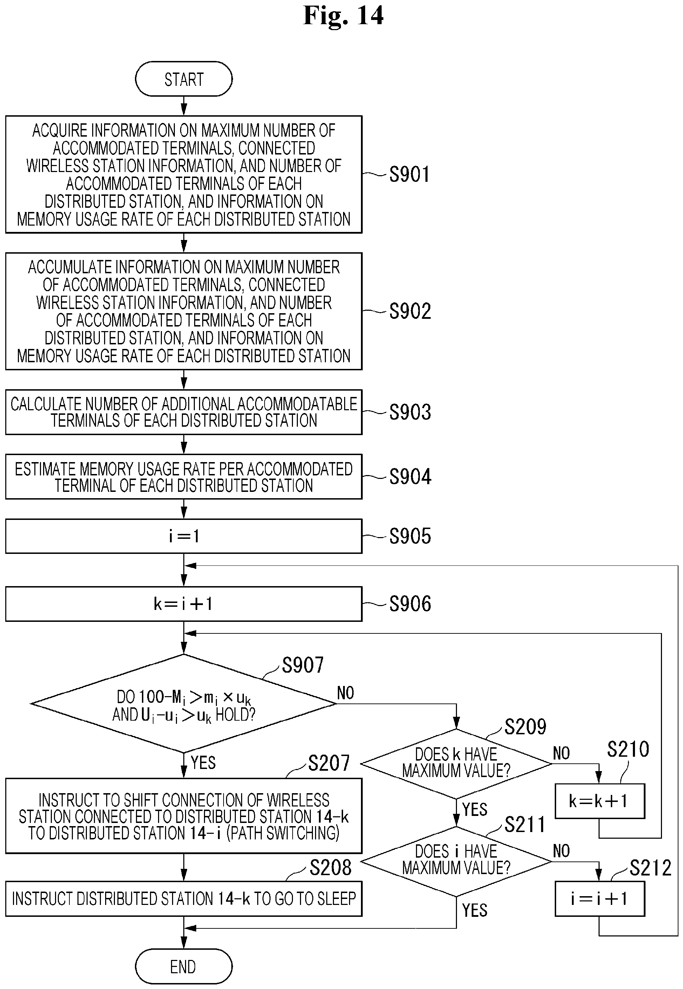

Fig. 14 is a flowchart illustrating an example of a flow of the sleep process executed by the management control device 20c in the second embodiment. Note that, in the process illustrated in Fig. 14, more specifically illustrated contents of the process illustrated in Fig. 13 will be described. In Fig. 14, the same processes as the processes in Fig. 4 will be given the same reference signs as the reference signs in Fig. 4, and description thereof will be omitted.

The acquisition unit 211 acquires, from each distributed station 14, the information on the maximum number of accommodated terminals, the connected wireless station information, and the number of accommodated terminals of each distributed station, as the cooperation information. Furthermore, the distributed station monitoring unit 212c acquires information on the memory usage rate of each distributed station 14 (step S901).

The acquisition unit 211 accumulates the acquired cooperation information for each distributed station 14 in the cooperation information accumulation unit 221. The distributed station monitoring unit 212c accumulates the acquired information on the memory usage rate of each distributed station 14 as the cooperation information (step S902). The real-time analysis unit 222c calculates the number of additional accommodatable terminals of each distributed station 14 on the basis of the cooperation information for each distributed station 14 accumulated in the cooperation information accumulation unit 221 (step S903). Furthermore, the real-time analysis unit 222c estimates the memory usage rate per accommodated terminal of each distributed station 14 on the basis of the cooperation information for each distributed station 14 accumulated in the cooperation information accumulation unit 221 (step S904).

Next, the real-time analysis unit 222c substitutes a value of 1 for the constant i (step S905). Next, the real-time analysis unit 222c substitutes a value of (i+1) for k (step S906). Thereafter, the real-time analysis unit 222c determines whether or not 100 - Mᵢ > mᵢ × uₖ and Uᵢ - uᵢ > uₖ are satisfied (step S907). Mᵢ represents the memory usage rate of the distributed station 14-i, and mᵢ represents the memory usage rate per accommodated terminal of each distributed station 14. Above mᵢ is calculated in the process in step S904. The condition indicated by 100 - Mᵢ > mᵢ × uₖ and Uᵢ - uᵢ > uₖ is a specific example of the second switching condition.

When determining that the second switching condition is satisfied (step S907 - YES), the real-time analysis unit 222c executes the processes in step S207 and the subsequent steps. On the other hand, when determining that the second switching condition is not satisfied (step S907 - NO), the real-time analysis unit 222c executes the processes in step S209 and the subsequent steps.

Here, the process in Fig. 14 will be described using specific numerical values. As an example, it is assumed that the maximum number of accommodated terminals of the distributed station 14-1 is 1000, the number of accommodated terminals of the distributed station 14-1 is 100, the memory usage rate M₁ of the distributed station 14-1 is 20%, the maximum number of accommodated terminals of the distributed station 14-2 is 800, the number of accommodated terminals of the distributed station 14-2 is 200, and the memory usage rate M₂ of the distributed station 14-2 is 30%. In this case, in the process in step S904, the real-time analysis unit 222c calculates m₁ = 20/100 = 0.2 and m₂ = 30/200 = 0.15 as estimated values of the memory usage rate per accommodated terminal of the distributed stations 14. In the above, m₁ represents an estimated value of the memory usage rate per accommodated terminal of the distributed station 14-1, and m₂ represents an estimated value of the memory usage rate per accommodated terminal of the distributed station 14-2.

In the process in step S907, the real-time analysis unit 222c determines whether or not 100 - Mᵢ > mᵢ × uₖ and Uᵢ - uᵢ > uₖ are satisfied. A case where i = 1 and k = 2 hold is represented as follows.
- 100 - Mᵢ ⇒ 100 - 20 = 80
- mᵢ × uₖ ⇒ 0.2 × 200 = 40
- Uᵢ - uᵢ ⇒ 1000 - 100 = 900

Grounded on the above results, 100 - Mᵢ > mᵢ × uₖ and Uᵢ - uᵢ > uₖ have 180 > 40 and 900 > 200. In this case, the real-time analysis unit 222c determines that the second switching condition is satisfied. Accordingly, the real-time analysis unit 222c verifies switching so as to connect the wireless station 12 connected to the distributed station 14-2 to the distributed station 14-1 and verifies sleep so as to cause the distributed station 14-2 to transition to the sleep state. The real-time analysis unit 222c notifies the optical path switching control unit 231 of the result of the switching judgment for connecting the wireless station 12 connected to the distributed station 14-2 to the distributed station 14-1 and notifies the sleep control unit 232 of the result of the sleep judgment for causing the distributed station 14-2 to transition to the sleep state.

This prompts the optical path switching control unit 231 to control switching of the optical path so as to connect the wireless station 12 connected to the distributed station 14-2 to the distributed station 14-1 in accordance with the notification from the real-time analysis unit 222c. The sleep control unit 232 is prompted to control sleep so as to cause the distributed station 14-2 to transition to the sleep state in accordance with the notification from the real-time analysis unit 222c.

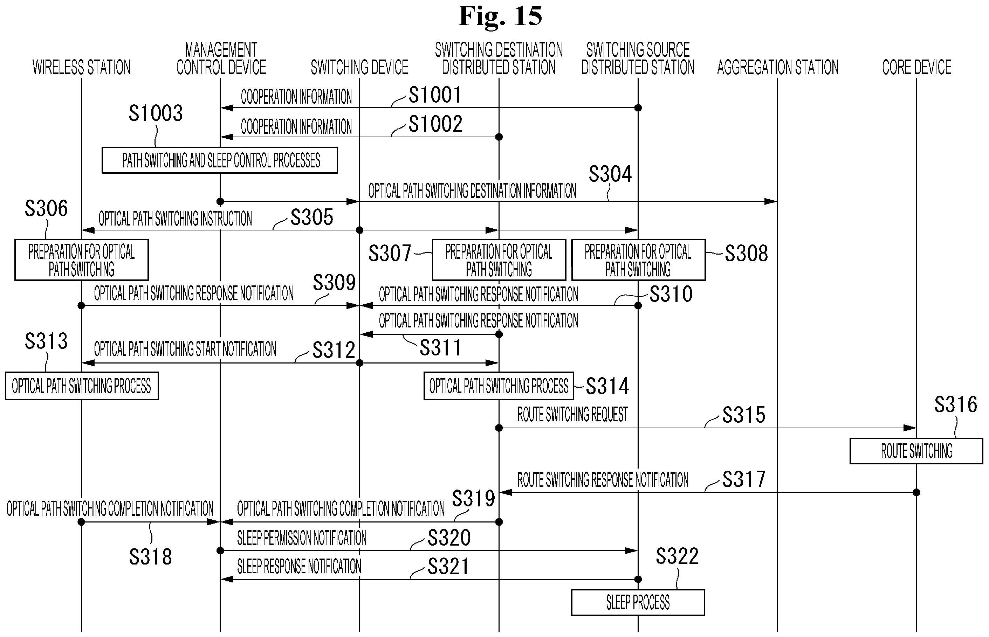

Fig. 15 is a sequence diagram illustrating an example of a detailed flow of the sleep process executed by the mobile NW system 100c in the second embodiment. In Fig. 15, the same processes as the processes in Fig. 5 will be given the same reference signs as the reference signs in Fig. 5, and description thereof will be omitted. Note that, in the description of Fig. 15, it is assumed that the distributed station 14-1 is a switching destination distributed station and the distributed station 14-2 is a switching source distributed station. Here, expressions of the switching destination distributed station 14-1 and the switching source distributed station 14-2 will be employed for description.

The cooperation information collection unit 21c of the management control device 20c acquires the cooperation information from the switching destination distributed station 14-1 and the switching source distributed station 14-2 at a predetermined cycle (step S1001, step S1002). Note that it is assumed that the cooperation information acquired in steps S1001 and S1002 includes information on the memory usage rate for each distributed station 14 in addition to at least the information on the number of accommodated terminals, the information on the maximum number of accommodated terminals, and the like. The cooperation information collection unit 21c accumulates the acquired cooperation information in the cooperation information accumulation unit 221.

When the cooperation information is accumulated in the cooperation information accumulation unit 221, the real-time analysis unit 222c performs judgment on optical path switching and sleep control (step S1003). The judgment on optical path switching and sleep control in step S1003 is a determination as to whether or not the second switching condition is satisfied in step S805. Here, it is assumed that the second switching condition in step S805 is satisfied. When the second switching condition is satisfied, the real-time analysis unit 222c executes the processes in step S304 and the subsequent steps.

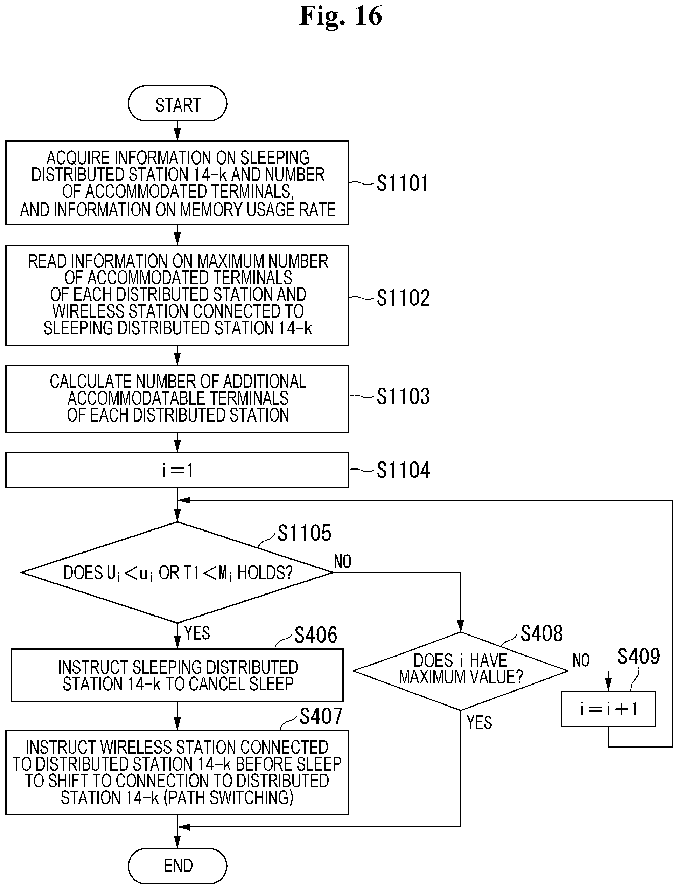

Fig. 16 is a flowchart illustrating an example of a flow of a sleep cancellation process executed by the management control device 20c in the second embodiment. In Fig. 16, the same processes as the processes in Fig. 6 will be given the same reference signs as the reference signs in Fig. 6, and description thereof will be omitted.

The acquisition unit 211 acquires information on the number of accommodated terminals and the sleeping distributed station 14-k from each distributed station 14 as the cooperation information. Furthermore, the distributed station monitoring unit 212c acquires information on the memory usage rate for each distributed station 14 as the cooperation information (step S1101). The acquisition unit 211 notifies the analysis unit 22c of the acquired information on the number of accommodated terminals and the sleeping distributed station 14-k, and information on the memory usage rate.

The real-time analysis unit 222c of the analysis unit 22c reads information on the maximum number of accommodated terminals of each distributed station 14 and information on the wireless station 12 connected to the sleeping distributed station 14-k from the cooperation information accumulation unit 221 (step S1102). The real-time analysis unit 222c calculates the number of additional accommodatable terminals of each distributed station 14 on the basis of the acquired cooperation information for each distributed station 14 (step S1103).

Next, the real-time analysis unit 222c substitutes a value of 1 for the constant i (step S1104). The real-time analysis unit 222c determines whether or not either Uᵢ < uᵢ or T1 < Mᵢ is satisfied (step S1105). The condition indicated by Uᵢ < uᵢ or T1 < Mᵢ is a specific example of a second sleep cancellation condition. In the second sleep cancellation condition, T1 < Mᵢ means that the memory usage rate Mᵢ of the distributed station 14-i exceeds a threshold T1 (for example, a specified value in advance, such as 80, 90, or 100%).

When determining that the second sleep cancellation condition (for example, Uᵢ < uᵢ or T1 < Mᵢ) is satisfied (step S1105 - YES), the real-time analysis unit 222c determines that switching of the optical path and sleep cancellation of the sleeping distributed station 14-k are required.

The real-time analysis unit 222c notifies the control unit 23 of the determination result. Thereafter, the processes in step S406 and the subsequent steps are executed. On the other hand, when determining that the second sleep cancellation condition (for example, Uᵢ < uᵢ or T1 < Mᵢ) is not satisfied (step S1105 - NO), the real-time analysis unit 222c executes the process in step S408.

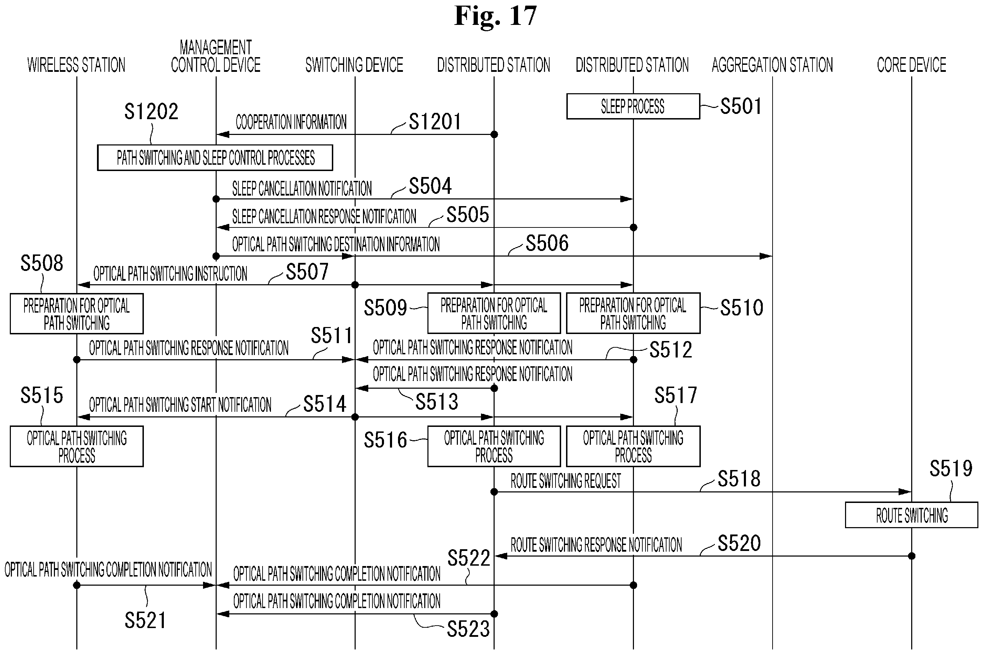

Fig. 17 is a sequence diagram illustrating an example of a detailed flow of the sleep cancellation process executed by the mobile NW system 100c in the second embodiment. In Fig. 17, the same processes as the processes in Fig. 7 will be given the same reference signs as the reference signs in Fig. 7, and description thereof will be omitted. Note that, in the description of Fig. 17, it is assumed that the distributed station 14-2 is in the sleep state.

The distributed station 14-2 is in the sleep state (step S501). The cooperation information collection unit 21c of the management control device 20c acquires the cooperation information from the distributed station 14-1 at a predetermined cycle (step S1201). Note that it is assumed that the cooperation information acquired in step S1201 includes information on the memory usage rate for each distributed station 14 in addition to at least the information on the number of accommodated terminals, the information on the maximum number of accommodated terminals, and the like. The cooperation information collection unit 21c accumulates the acquired cooperation information in the cooperation information accumulation unit 221.

When the cooperation information is accumulated in the cooperation information accumulation unit 221, the real-time analysis unit 222c performs judgment on optical path switching and sleep control (step S1202). The judgment on optical path switching and sleep control in step S1202 is relevant to whether or not the sleep cancellation condition is satisfied. Here, it is assumed that the sleep cancellation condition is satisfied. When the sleep cancellation condition is satisfied, the real-time analysis unit 222c executes the processes in step S504 and the subsequent steps.

According to the mobile NW system 100c in the second embodiment configured as described above, the same effects as the effects of the first embodiment can be obtained. Specifically, in the mobile NW system 100c, the management control device 20c further acquires information on the memory usage rate for each distributed station 14 as the cooperation information and verifies requirements for optical path switching on the basis of the cooperation information. When determining that switching of the optical path is required, the management control device 20c controls switching of the optical path between one or more wireless stations 12 and the plurality of distributed stations 14. Furthermore, the management control device 20c causes the distributed station that can sleep to transition to the sleep state after switching of the optical path is performed. This ensures that the optical path switching and the sleep control are performed while the load of each distributed station 14 is analyzed. Therefore, an effect of power saving can be increased without involving deterioration of the communication quality.

### (Modification 1 of Second Embodiment)

In the above-described embodiment, a configuration in which the management control device 20c directly acquires the cooperation information from the distributed station 14 has been illustrated. The management control device 20c may acquire the cooperation information through another device. Here, the another device is, for example, a wireless controller. When configured in such a manner, the mobile NW system 100c newly includes a wireless controller 30a, and the wireless controller 30a is provided between the management control device 20c and the distributed stations 14.

The wireless controller 30a acquires the cooperation information from each distributed station 14 at a predetermined cycle by wireless communication. The wireless controller 30a sends the acquired cooperation information to the management control device 20c by wireless communication. Note that the wireless controller 30a may receive a sleep control instruction from the management control device 20c and send the received sleep control instruction to the switching source distributed station.

With this configuration, the cooperation information can be collected by wireless communication.

### (Modification 2 of Second Embodiment)

In the above-described embodiment, a configuration in which the management control device 20c performs the optical path switching control process and the sleep control process has been illustrated. In contrast to this, the switching device 13 may be configured to perform the optical path switching control process and the sleep control process. When configured in such a manner, the switching device 13 includes the control unit 23, and the management control device 20c does not include the control unit 23. The real-time analysis unit 222c of the management control device 20c notifies the switching device 13 of the analysis result. Note that the real-time analysis unit 222c may notify the switching device 13 of the analysis result only when optical path switching and sleep control are to be performed. The control unit 23 of the switching device 13 performs the optical path switching control process and the sleep control process on the basis of the analysis result notified by the management control device 20c.

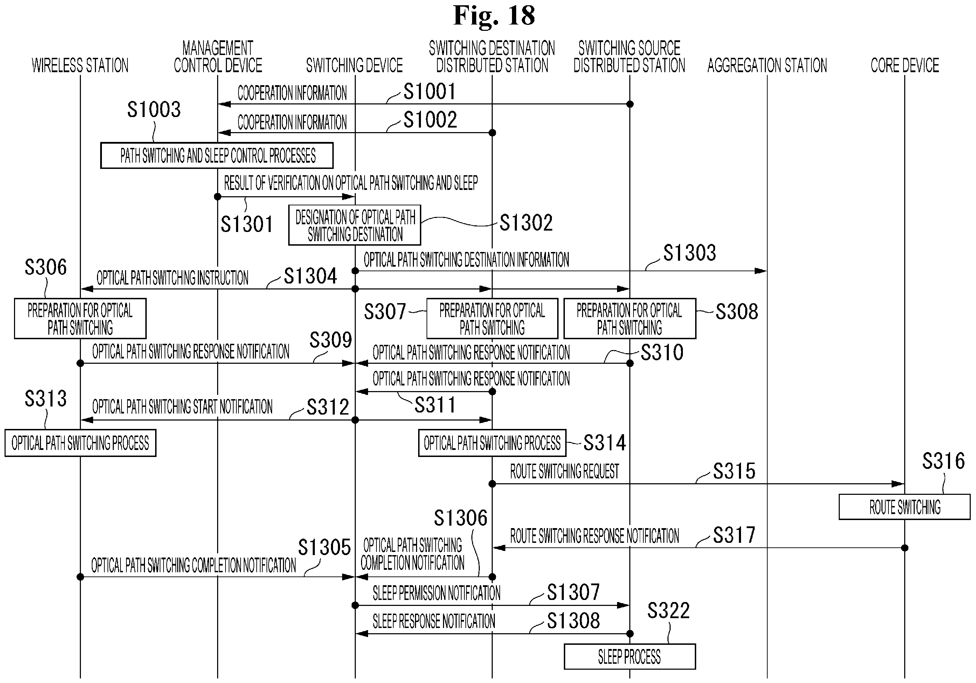

Fig. 18 is a sequence diagram illustrating an example of a detailed flow of a sleep process executed by a mobile NW system 100c in Modification 2 of the second embodiment. In Fig. 18, the same processes as the processes in Fig. 15 will be given the same reference signs as the reference signs in Fig. 15, and description thereof will be omitted.

After the processes from step S1001 to step S1003 are executed, a real-time analysis unit 222c instructs a switching device 13b to perform optical path switching control and sleep control when the second switching condition is satisfied (step S1301). The switching device 13b receives the instruction sent from a management control device 20c.

An optical path switching control unit 231 of the switching device 13b designates the switching destination of the optical path from the information included in the received instruction (step S1302). The optical path switching control unit 231 notifies an aggregation station 15 of the optical path switching destination information (step S1303). Thereafter, the optical path switching control unit 231 instructs the wireless station 12 connected to the switching source distributed station 14-2, the switching destination distributed station 14-1, and the switching source distributed station 14-2 to switch the optical path (step S1304). Thereafter, the processes from step S306 to step S317 are executed.

When switching of the optical path has been completed, the wireless station 12 sends the optical path switching completion notification to the switching device 13b (step S1305). Note that the wireless station 12 may also send the optical path switching completion notification to the management control device 20c. When switching of the optical path has been completed, the switching destination distributed station 14-1 sends the optical path switching completion notification to the switching device 13b (step S1306). Note that the switching destination distributed station 14-1 may also send the optical path switching completion notification to the management control device 20c.

When the optical path switching completion notification is received from the sending destinations of the optical path switching start notification, a sleep control unit 232 included in the switching device 13b sends the sleep permission notification to the switching source distributed station 14-2 (step S1307). When obtaining the sleep permission notification from the switching device 13b, the switching source distributed station 14-2 sends the sleep response notification to the switching device 13b (step S1308). After sending the sleep response notification, the switching source distributed station 14-2 transitions to the sleep state (step S322).

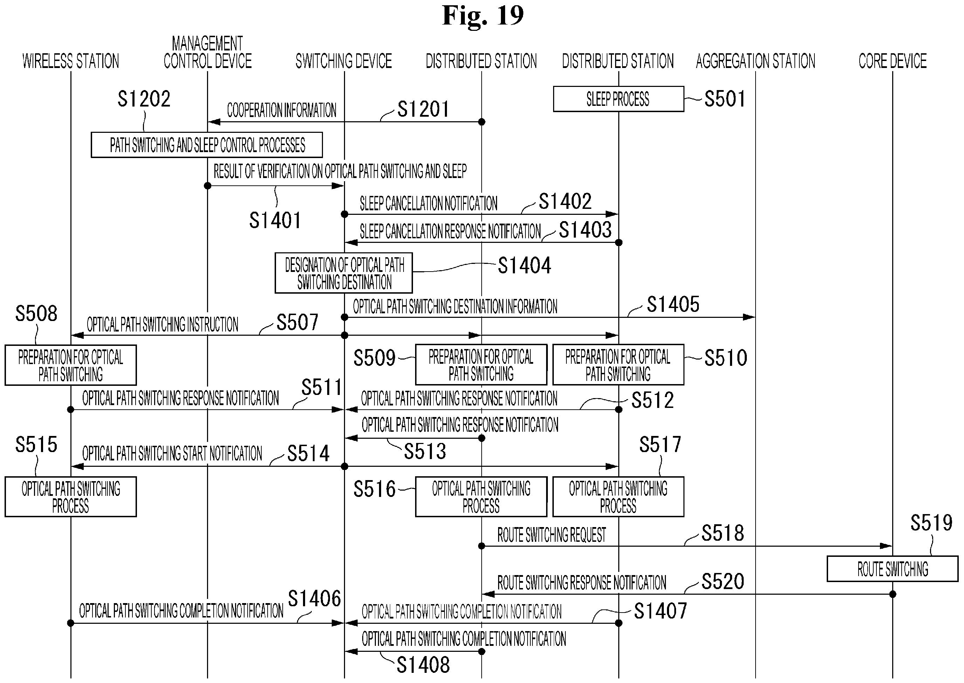

Fig. 19 is a sequence diagram illustrating an example of a detailed flow of a sleep cancellation process executed by the mobile NW system 100c in Modification 2 of the second embodiment. In Fig. 19, the same processes as the processes in Fig. 17 will be given the same reference signs as the reference signs in Fig. 17, and description thereof will be omitted. Note that, in the description of Fig. 19, it is assumed that the distributed station 14-2 is in the sleep state.

After the processes in steps S501, S1201, and S1202 are executed, the real-time analysis unit 222c instructs the switching device 13b to perform optical path switching control and sleep control when a sleep cancellation condition is satisfied (step S1401). The switching device 13b receives the instruction sent from the management control device 20c.

The sleep control unit 232 of the switching device 13b sends the sleep cancellation notification to the distributed station 14-2 on the basis of the information included in the received instruction (step S1402). In response to the reception of the sleep cancellation notification, the distributed station 14-2 sends the sleep cancellation response notification to the switching device 13b (step S1403).

The optical path switching control unit 231 of the switching device 13b designates the switching destination of the optical path from the information included in the received instruction (step S1404). The optical path switching control unit 231 of the switching device 13b notifies the aggregation station 15 of the optical path switching destination information (step S1405). Thereafter, the processes from step S507 to step S520 are executed.

When switching of the optical path has been completed, the wireless station 12 sends the optical path switching completion notification to the switching device 13b (step S1406). When switching of the optical path has been completed, the distributed station 14-1 sends the optical path switching completion notification to the switching device 13b (step S1407). When switching of the optical path has been completed, the distributed station 14-2 sends the optical path switching completion notification to the switching device 13b (step S1408).

### (Third Embodiment)

A third embodiment has a configuration different from the configuration of the second embodiment in that processing load information (for example, information on the memory usage rate or information on the CPU usage rate for each distributed station) and processing delay information for each distribution station are further included as the cooperation information. Note that the system configuration is the same as the system configuration of the second embodiment. In the third embodiment, as an example of the processing load information, information on the memory usage rate for each distributed station will be described as an example.

A management control device 20c verifies optical path switching and sleep on the basis of the information on the number of terminals for each distributed station 14, the information on the memory usage rate for each distributed station 14, and the processing delay information for each distributed station 14. For example, a distributed station monitoring unit 212c monitors each distributed station 14 and measures the memory usage rate for each distributed station 14. Furthermore, the distributed station monitoring unit 212c monitors each distributed station 14 and collects the processing delay information for each distributed station 14. The distributed station monitoring unit 212c outputs the information on the memory usage rate measured for each distributed station 14 and the processing delay information for each distributed station 14 to an analysis unit 22c as the cooperation information.

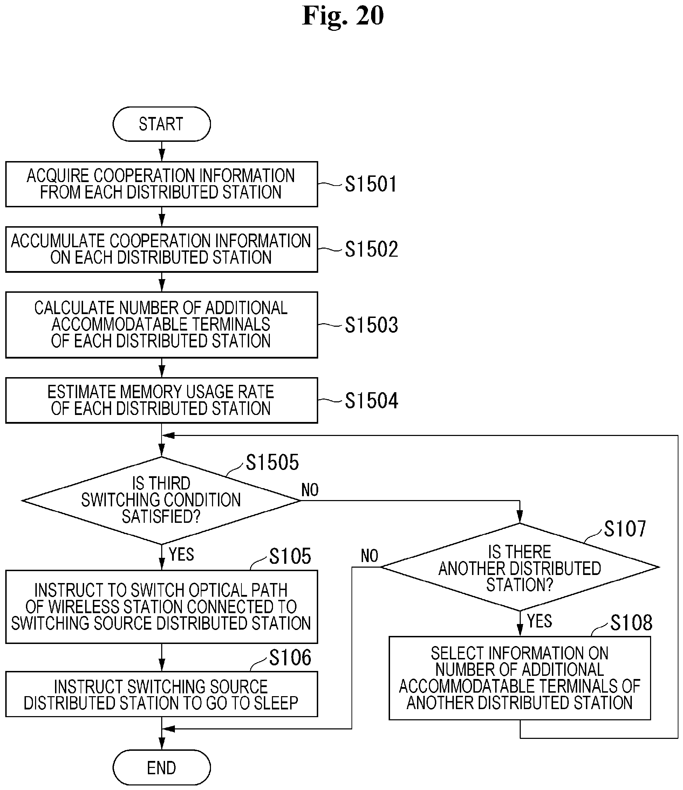

Fig. 20 is a flowchart illustrating an example of a flow of a sleep process executed by the management control device 20c in the third embodiment. In Fig. 20, the same processes as the processes in Fig. 13 will be given the same reference signs as the reference signs in Fig. 13, and description thereof will be omitted.

A cooperation information collection unit 21c acquires the cooperation information from each distributed station 14 (step S1501). Specifically, an acquisition unit 211 acquires at least information on the number of accommodated terminals, information on the maximum number of accommodated terminals, and the like as the cooperation information from each distributed station 14. Furthermore, the distributed station monitoring unit 212c measures the memory usage rate for each distributed station 14 and also acquires the processing delay information for each distributed station 14. The cooperation information collection unit 21c accumulates the acquired cooperation information for each distributed station 14 in a cooperation information accumulation unit 221 (step S1502). Specifically, in addition to the cooperation information including at least the information on the number of accommodated terminals, the information on the maximum number of accommodated terminals, and the like, the cooperation information collection unit 21c accumulates information on the memory usage rate for each distributed station 14 and the processing delay information for each distributed station 14 in the cooperation information accumulation unit 221 as the cooperation information from each distributed station 14.

A real-time analysis unit 222c calculates the number of additional accommodatable terminals of each distributed station 14 on the basis of the cooperation information for each distributed station 14 accumulated in the cooperation information accumulation unit 221 (step S1503). Furthermore, the real-time analysis unit 222c estimates the memory usage rate of each distributed station 14 on the basis of the cooperation information for each distributed station 14 accumulated in the cooperation information accumulation unit 221 (step S1504).

The real-time analysis unit 222c determines whether or not a third switching condition is satisfied (step S1505). The third switching condition is a condition indicating that switching of the optical path between the wireless station 12 and the distributed station 14 is required and is, for example, that the number of additional accommodatable terminals of a certain distributed station 14 is larger than the number of accommodated terminals of the distributed station 14 that is an object to be subjected to sleep judgment, and that the memory usage rate does not exceed 100%, and that the processing delay of the distributed station 14 that is an object to be subjected to sleep judgment does not exceed a threshold.

When determining that the third switching condition is satisfied (step S1505 - YES), the real-time analysis unit 222c executes the processes in step S105 and the subsequent steps. On the other hand, when determining that the third switching condition is not satisfied (step S1505 - NO), the real-time analysis unit 222c executes the processes in step S107 and the subsequent steps.

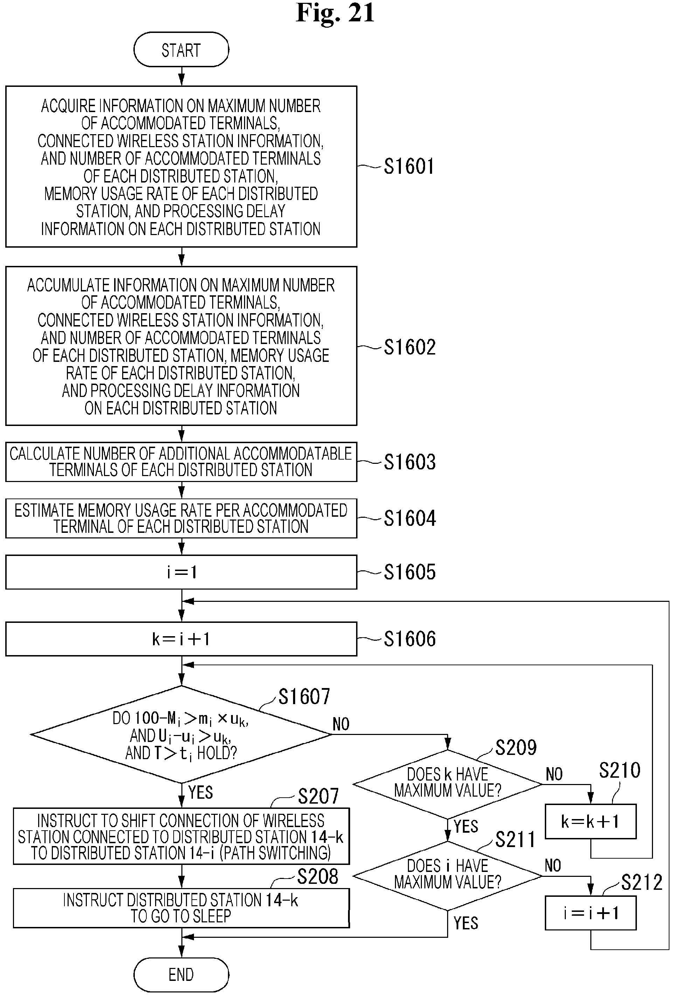

Fig. 21 is a flowchart illustrating an example of a flow of a sleep process executed by the management control device 20c in the third embodiment. Note that, in the process illustrated in Fig. 21, more specifically illustrated contents of the process illustrated in Fig. 20 will be described. In Fig. 21, the same processes as the processes in Fig. 14 will be given the same reference signs as the reference signs in Fig. 14, and description thereof will be omitted.

The acquisition unit 211 acquires, from each distributed station 14, the information on the maximum number of accommodated terminals, the connected wireless station information, and the number of accommodated terminals of each distributed station, as the cooperation information. Furthermore, the distributed station monitoring unit 212c acquires the information on the memory usage rate and the processing delay information on each distributed station 14 (step S1601).

The acquisition unit 211 accumulates the acquired cooperation information for each distributed station 14 in the cooperation information accumulation unit 221. Furthermore, the distributed station monitoring unit 212c accumulates the acquired information on the memory usage rate and processing delay information on each distributed station 14 as the cooperation information (step S1602). The real-time analysis unit 222c calculates the number of additional accommodatable terminals of each distributed station 14 on the basis of the cooperation information for each distributed station 14 accumulated in the cooperation information accumulation unit 221 (step S1603). Furthermore, the real-time analysis unit 222c estimates the memory usage rate per accommodated terminal of each distributed station 14 on the basis of the cooperation information for each distributed station 14 accumulated in the cooperation information accumulation unit 221 (step S1604).

Next, the real-time analysis unit 222c substitutes a value of 1 for the constant i (step S1605). Next, the real-time analysis unit 222c substitutes a value of (i+1) for k (step S1606). Thereafter, the real-time analysis unit 222c determines whether or not 100 - Mᵢ > mᵢ × uₖ, and Uᵢ - uᵢ > uₖ, and T > tᵢ are satisfied (step S1607). T represents the threshold, and tᵢ in the third embodiment represents a processing delay of the distributed station 14-i. The condition indicated by 100 - Mᵢ > mᵢ × uₖ, and Uᵢ - uᵢ > uₖ, and T > tᵢ is a specific example of the third switching condition.

When determining that the third switching condition is satisfied (step S1607 - YES), the real-time analysis unit 222c executes the processes in step S207 and the subsequent steps. On the other hand, when determining that the third switching condition is not satisfied (step S1607 - NO), the real-time analysis unit 222c executes the processes in step S209 and the subsequent steps.

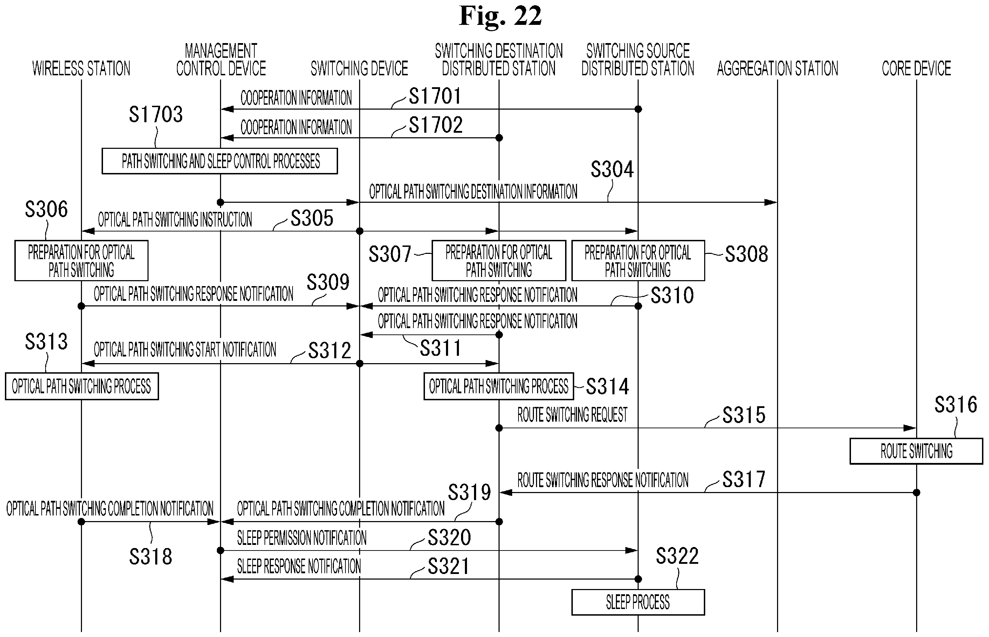

Fig. 22 is a sequence diagram illustrating an example of a detailed flow of the sleep process executed by a mobile NW system 100c in the third embodiment. In Fig. 22, the same processes as the processes in Fig. 15 will be given the same reference signs as the reference signs in Fig. 15, and description thereof will be omitted. Note that, in the description of Fig. 22, it is assumed that the distributed station 14-1 is a switching destination distributed station and the distributed station 14-2 is a switching source distributed station. Here, expressions of the switching destination distributed station 14-1 and the switching source distributed station 14-2 will be employed for description.

The cooperation information collection unit 21c of the management control device 20c acquires the cooperation information from the switching destination distributed station 14-1 and the switching source distributed station 14-2 at a predetermined cycle (step S1701, step S1702). Note that it is assumed that the cooperation information acquired in steps S1701 and S1702 includes information on the memory usage rate for each distributed station 14 and the processing delay information for each distributed station 14 in addition to at least the information on the number of accommodated terminals, the information on the maximum number of accommodated terminals, and the like. The cooperation information collection unit 21c accumulates the acquired cooperation information in the cooperation information accumulation unit 221.

When the cooperation information is accumulated in the cooperation information accumulation unit 221, the real-time analysis unit 222c performs judgment on optical path switching and sleep control (step S1703). The judgment on optical path switching and sleep control in step S1703 is a determination as to whether or not the third switching condition is satisfied in step S1505. Here, it is assumed that the third switching condition in step S1505 is satisfied. When the third switching condition is satisfied, the real-time analysis unit 222c executes the processes in step S304 and the subsequent steps.

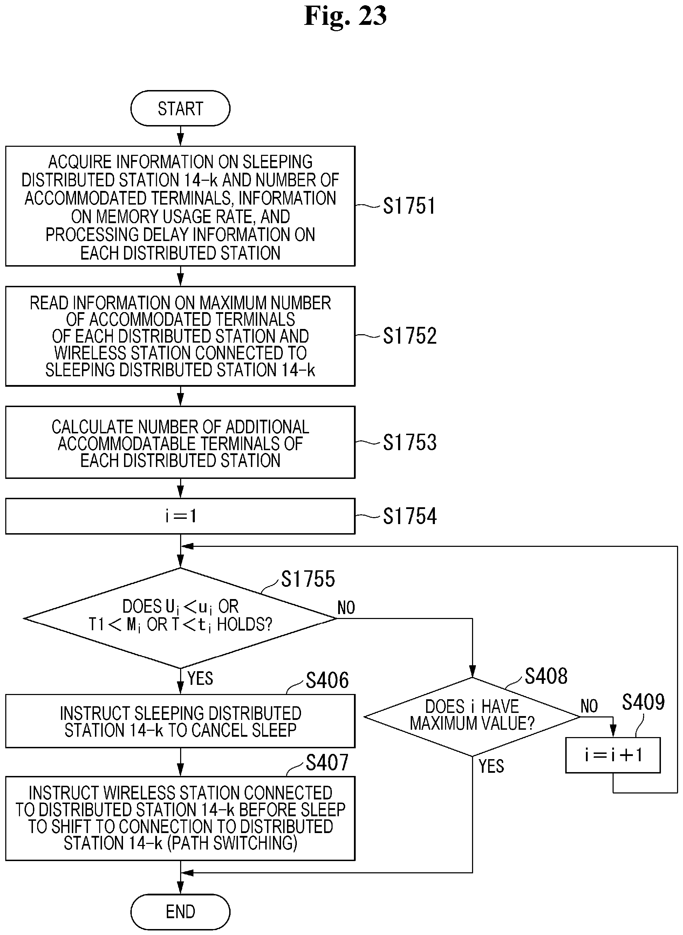

Fig. 23 is a flowchart illustrating an example of a flow of a sleep cancellation process executed by the management control device 20c in the third embodiment. In Fig. 23, the same processes as the processes in Fig. 16 will be given the same reference signs as the reference signs in Fig. 16, and description thereof will be omitted.

The acquisition unit 211 acquires information on the number of accommodated terminals and the sleeping distributed station 14-k from each distributed station 14 as the cooperation information. Furthermore, the distributed station monitoring unit 212c acquires information on the memory usage rate for each distributed station 14 and the processing delay information for each distributed station 14 as the cooperation information (step S1751). The acquisition unit 211 notifies the analysis unit 22c of the acquired information on the number of accommodated terminals and the sleeping distributed station 14-k, information on the memory usage rate, and processing delay information for each distributed station 14.

The real-time analysis unit 222c of the analysis unit 22c reads information on the maximum number of accommodated terminals of each distributed station 14 and information on the wireless station 12 connected to the sleeping distributed station 14-k from the cooperation information accumulation unit 221 (step S1752). The real-time analysis unit 222c calculates the number of additional accommodatable terminals of each distributed station 14 on the basis of the acquired cooperation information for each distributed station 14 (step S1753).

Next, the real-time analysis unit 222c substitutes a value of 1 for the constant i (step S1754). The real-time analysis unit 222c determines whether or not any of Uᵢ < uᵢ, T1 < Mᵢ, and T < tᵢ is satisfied (step S1755). The condition indicated by Uᵢ < uᵢ, T1 < Mᵢ, or T < tᵢ is a specific example of a third sleep cancellation condition. In the third sleep cancellation condition, T < tᵢ means that the processing delay of the distributed station 14-i exceeds the threshold.

When determining that the third sleep cancellation condition (for example, Uᵢ < uᵢ, or T1 < Mᵢ, or T < tᵢ) is satisfied (step S1755 - YES), the real-time analysis unit 222c determines that switching of the optical path and sleep cancellation of the sleeping distributed station 14-k are required.

The real-time analysis unit 222c notifies a control unit 23 of the determination result. Thereafter, the processes in step S406 and the subsequent steps are executed. On the other hand, when determining that the third sleep cancellation condition (for example, Uᵢ < uᵢ, or T1 < Mᵢ, or T < tᵢ) is not satisfied (step S1755 - NO), the real-time analysis unit 222c executes the process in step S408.

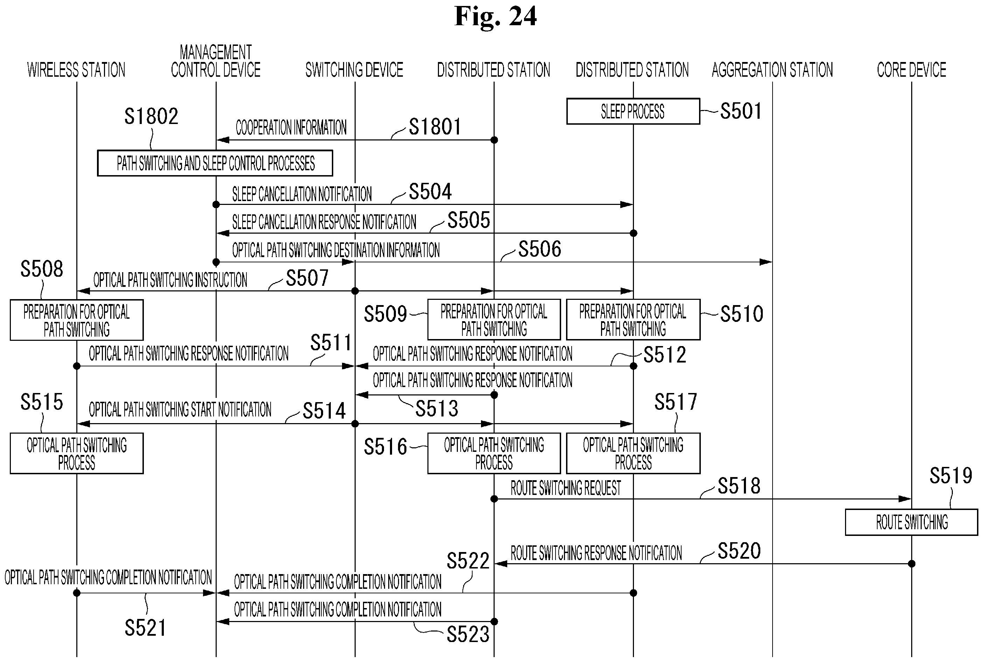

Fig. 24 is a sequence diagram illustrating an example of a detailed flow of the sleep cancellation process executed by the mobile NW system 100c in the third embodiment. In Fig. 24, the same processes as the processes in Fig. 17 will be given the same reference signs as the reference signs in Fig. 17, and description thereof will be omitted. Note that, in the description of Fig. 24, it is assumed that the distributed station 14-2 is in the sleep state.

The distributed station 14-2 is in the sleep state (step S501). The cooperation information collection unit 21c of the management control device 20c acquires the cooperation information from the distributed station 14-1 at a predetermined cycle (step S1801). Note that it is assumed that the cooperation information acquired in step S1801 includes information on the memory usage rate and the processing delay information for each distributed station 14. The cooperation information collection unit 21c accumulates the acquired cooperation information in the cooperation information accumulation unit 221.

When the cooperation information is accumulated in the cooperation information accumulation unit 221, the real-time analysis unit 222c performs judgment on optical path switching and sleep control (step S1802). The judgment on optical path switching and sleep control in step S1802 is relevant to whether or not the sleep cancellation condition is satisfied. Here, it is assumed that the sleep cancellation condition is satisfied. When the sleep cancellation condition is satisfied, the real-time analysis unit 222c executes the processes in step S504 and the subsequent steps.

According to the mobile NW system 100c in the third embodiment configured as described above, the same effects as the effects of the first embodiment can be obtained. Specifically, in the mobile NW system 100c in the third embodiment, the management control device 20c further acquires information on the memory usage rate for each distributed station 14 and the processing delay information for each distributed station 14 as the cooperation information and verifies requirements for switching the optical path on the basis of the cooperation information. When determining that switching of the optical path is required, the management control device 20c controls switching of the optical path between one or more wireless stations 12 and the plurality of distributed stations 14. Furthermore, the management control device 20c causes the distributed station that can sleep to transition to the sleep state after switching of the optical path is performed. This ensures that the optical path switching and the sleep control are performed while the load of each distributed station 14 is analyzed. Therefore, an effect of power saving can be increased without involving deterioration of the communication quality.

### (Modification 1 of Third Embodiment)

In the above-described embodiment, a configuration in which the management control device 20c directly acquires the cooperation information from the distributed station 14 has been illustrated. The management control device 20c may acquire the cooperation information through another device. Here, the another device is, for example, a wireless controller. When configured in such a manner, the mobile NW system 100c newly includes a wireless controller 30a, and the wireless controller 30a is provided between the management control device 20c and the distributed stations 14.

The wireless controller 30a acquires the cooperation information from each distributed station 14 at a predetermined cycle by wireless communication. The wireless controller 30a sends the acquired cooperation information to the management control device 20c by wireless communication. Note that the wireless controller 30a may receive a sleep control instruction from the management control device 20c and send the received sleep control instruction to the switching source distributed station.

With this configuration, the cooperation information can be collected by wireless communication.

### (Modification 2 of Third Embodiment)

In the above-described embodiment, a configuration in which the management control device 20c performs the optical path switching control process and the sleep control process has been illustrated. In contrast to this, the switching device 13 may be configured to perform the optical path switching control process and the sleep control process. When configured in such a manner, the switching device 13 includes the control unit 23, and the management control device 20c does not include the control unit 23. The real-time analysis unit 222c of the management control device 20c notifies the switching device 13 of the analysis result. Note that the real-time analysis unit 222c may notify the switching device 13 of the analysis result only when optical path switching and sleep control are to be performed. The control unit 23 of the switching device 13 performs the optical path switching control process and the sleep control process on the basis of the analysis result notified by the management control device 20c.

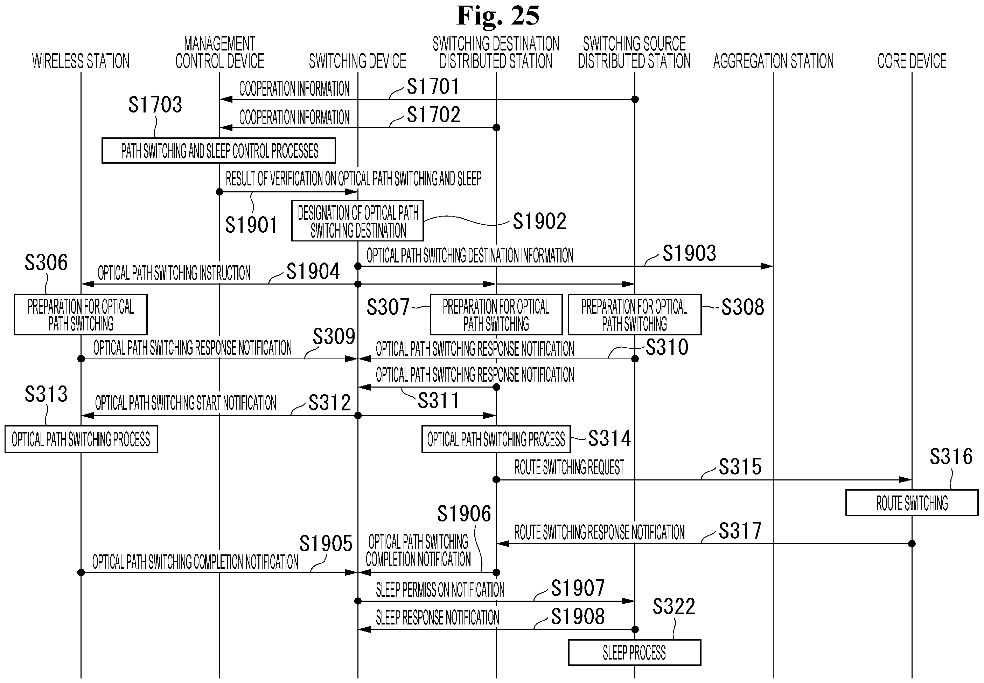

Fig. 25 is a sequence diagram illustrating an example of a detailed flow of a sleep process executed by a mobile NW system 100c in Modification 2 of the third embodiment. In Fig. 25, the same processes as the processes in Fig. 22 will be given the same reference signs as the reference signs in Fig. 22, and description thereof will be omitted.

After the processes from step S1701 to step S1703 are executed, a real-time analysis unit 222c instructs a switching device 13b to perform optical path switching control and sleep control when the third switching condition is satisfied (step S1901). The switching device 13b receives the instruction sent from the management control device 20c.

An optical path switching control unit 231 of the switching device 13b designates the switching destination of the optical path from the information included in the received instruction (step S1902). The optical path switching control unit 231 notifies an aggregation station 15 of the optical path switching destination information (step S1903). Thereafter, the optical path switching control unit 231 instructs the wireless station 12 connected to the switching source distributed station 14-2, the switching destination distributed station 14-1, and the switching source distributed station 14-2 to switch the optical path (step S1904). Thereafter, the processes from step S306 to step S317 are executed.

When switching of the optical path has been completed, the wireless station 12 sends the optical path switching completion notification to the switching device 13b (step S1905). Note that the switching destination distributed station 14-1 may also send the optical path switching completion notification to the management control device 20c. When switching of the optical path has been completed, the switching destination distributed station 14-1 sends the optical path switching completion notification to the switching device 13b (step S1906). Note that the switching destination distributed station 14-1 may also send the optical path switching completion notification to the management control device 20c.

When the optical path switching completion notification is received from the sending destinations of the optical path switching start notification, a sleep control unit 232 included in the switching device 13b sends the sleep permission notification to the switching source distributed station 14-2 (step S1907). When the sleep permission notification is obtained from the switching device 13b, the switching source distributed station 14-2 sends the sleep response notification to the switching device 13b (step S1908). After sending the sleep response notification, the switching source distributed station 14-2 transitions to the sleep state (step S322).

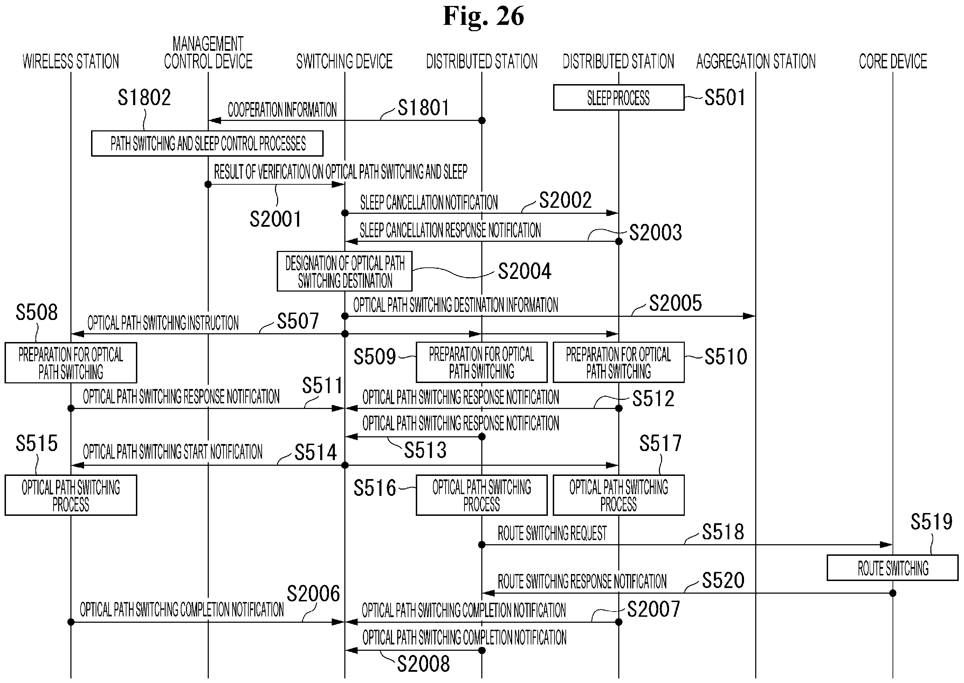

Fig. 26 is a sequence diagram illustrating an example of a detailed flow of a sleep cancellation process executed by the mobile NW system 100c in Modification 2 of the third embodiment. In Fig. 26, the same processes as the processes in Fig. 24 will be given the same reference signs as the reference signs in Fig. 24, and description thereof will be omitted.

After the processes in steps S501, S1801, and S1802 are executed, the real-time analysis unit 222c instructs the switching device 13b to perform optical path switching control and sleep control when a sleep cancellation condition is satisfied (step S2001). The switching device 13b receives the instruction sent from the management control device 20c.

The sleep control unit 232 of the switching device 13b sends the sleep cancellation notification to the distributed station 14-2 on the basis of the information included in the received instruction (step S2002). In response to the reception of the sleep cancellation notification, the distributed station 14-2 sends the sleep cancellation response notification to the switching device 13b (step S2003).

The optical path switching control unit 231 of the switching device 13b designates the switching destination of the optical path from the information included in the received instruction (step S2004). The optical path switching control unit 231 of the switching device 13b notifies the aggregation station 15 of the optical path switching destination information (step S2005). Thereafter, the processes from step S507 to step S520 are executed.

When switching of the optical path has been completed, the wireless station 12 sends the optical path switching completion notification to the switching device 13b (step S2006). When switching of the optical path has been completed, the distributed station 14-1 sends the optical path switching completion notification to the switching device 13b (step S2007). When switching of the optical path has been completed, the distributed station 14-2 sends the optical path switching completion notification to the switching device 13b (step S2008).

### (Fourth Embodiment)

A fourth embodiment has a configuration different from the configuration of the first embodiment in that information on a transmission delay between the terminal 11 and each distributed station 14 is further included in the cooperation information.

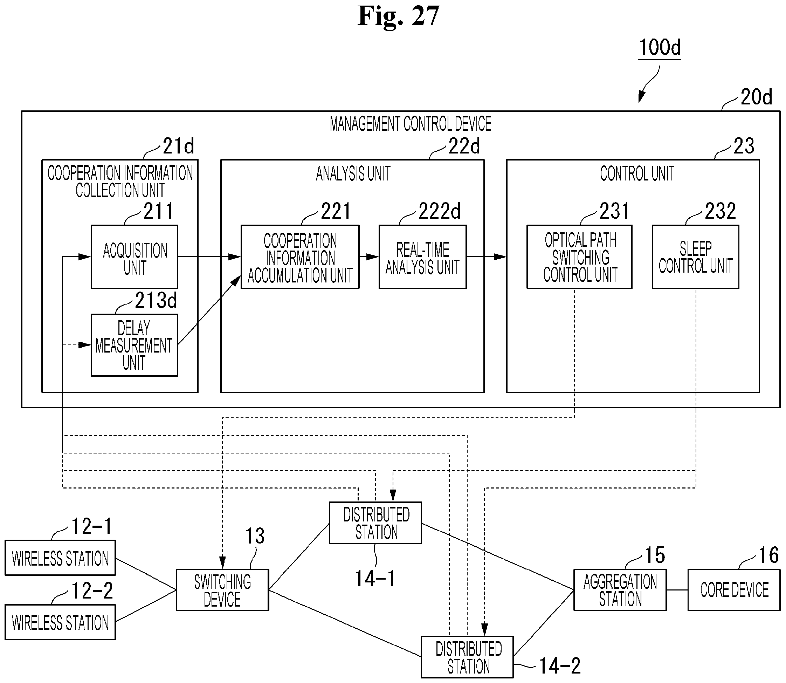

Fig. 27 is a diagram illustrating a configuration example of a mobile NW system 100d in the fourth embodiment. The mobile NW system 100d in the fourth embodiment includes one or more wireless stations 12, a switching device 13, a plurality of distributed stations 14, an aggregation station 15, a core device 16, and a management control device 20d. The management control device 20d includes a cooperation information collection unit 21d, an analysis unit 22d, and a control unit 23.

The cooperation information collection unit 21d includes an acquisition unit 211 and a delay measurement unit 213d. The delay measurement unit 213d measures a transmission delay between the terminal 11 and each distributed station 14. For example, the delay measurement unit 213d measures a transmission delay between the terminal 11 and each distributed station 14 on the basis of a round-trip time (RTT) obtained as a result of sending a ping. The delay measurement unit 213d outputs information on the transmission delay measured for each distributed station 14 to the analysis unit 22d as the cooperation information.

The analysis unit 22d includes a cooperation information accumulation unit 221 and a real-time analysis unit 222d. The real-time analysis unit 222d analyzes the state of communication in the mobile NW system 100d, such as the amount of change in the number of connections of the distributed station 14 per unit time, on the basis of the cooperation information. Specifically, the real-time analysis unit 222d estimates the delay time per accommodated terminal by dividing the delay time by the current number of accommodated terminals. Furthermore, the real-time analysis unit 222d multiplies the number of accommodated terminals of another distributed station 14 by the delay time per accommodated terminal of the object distributed station 14 and, when the delay time does not exceed a threshold and the number of accommodated terminals of the another distributed station 14 is smaller than the number of terminals that can be additionally accommodated in the object distributed station 14, verifies optical path switching and sleep.

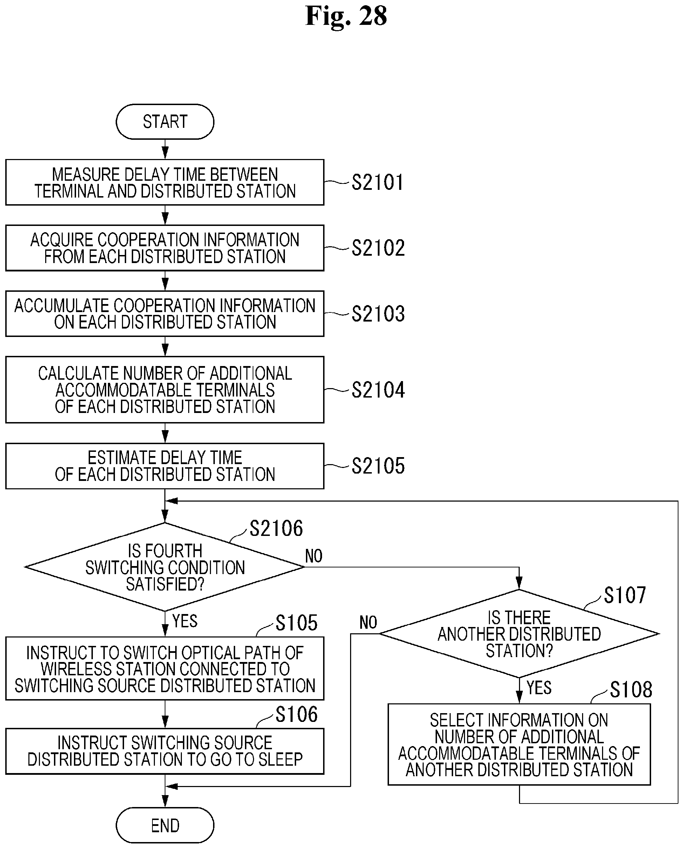

Fig. 28 is a flowchart illustrating an example of a flow of a sleep process executed by the management control device 20d in the fourth embodiment. In Fig. 28, the same processes as the processes in Fig. 3 will be given the same reference signs as the reference signs in Fig. 3, and description thereof will be omitted.

The delay measurement unit 213d measures a transmission delay between the terminal 11 and each distributed station 14 (step S2101). The cooperation information collection unit 21d acquires the cooperation information from each distributed station 14 (step S2102). Specifically, an acquisition unit 211 acquires at least information on the number of accommodated terminals, information on the maximum number of accommodated terminals, and the like as the cooperation information from each distributed station 14. The cooperation information collection unit 21d accumulates the acquired cooperation information for each distributed station 14 in the cooperation information accumulation unit 221 (step S2103). Specifically, in addition to the cooperation information including at least the information on the number of accommodated terminals, the information on the maximum number of accommodated terminals, and the like, the cooperation information collection unit 21d accumulates information on the transmission delay between the terminal 11 and each distributed station 14 in the cooperation information accumulation unit 221 as the cooperation information from each distributed station 14.

The real-time analysis unit 222d calculates the number of additional accommodatable terminals of each distributed station 14 on the basis of the cooperation information for each distributed station 14 accumulated in the cooperation information accumulation unit 221 (step S2104). Furthermore, the real-time analysis unit 222d estimates the delay time of each distributed station 14 on the basis of the information on the transmission delay between the terminal 11 and each distributed station 14 accumulated in the cooperation information accumulation unit 221 (step S2105).

The real-time analysis unit 222d determines whether or not a fourth switching condition is satisfied (step S2106). The fourth switching condition is a condition indicating that switching of the optical path between the wireless station 12 and the distributed station 14 is required and is, for example, that the number of additional accommodatable terminals of a certain distributed station 14 is larger than the number of accommodated terminals of the distributed station 14 that is an object to be subjected to sleep judgment, and that the transmission delay does not exceed the threshold.

When determining that the fourth switching condition is satisfied (step S2106 - YES), the real-time analysis unit 222d executes the processes in step S105 and the subsequent steps. On the other hand, when determining that the fourth switching condition is not satisfied (step S2106 - NO), the real-time analysis unit 222d executes the processes in step S107 and the subsequent steps.

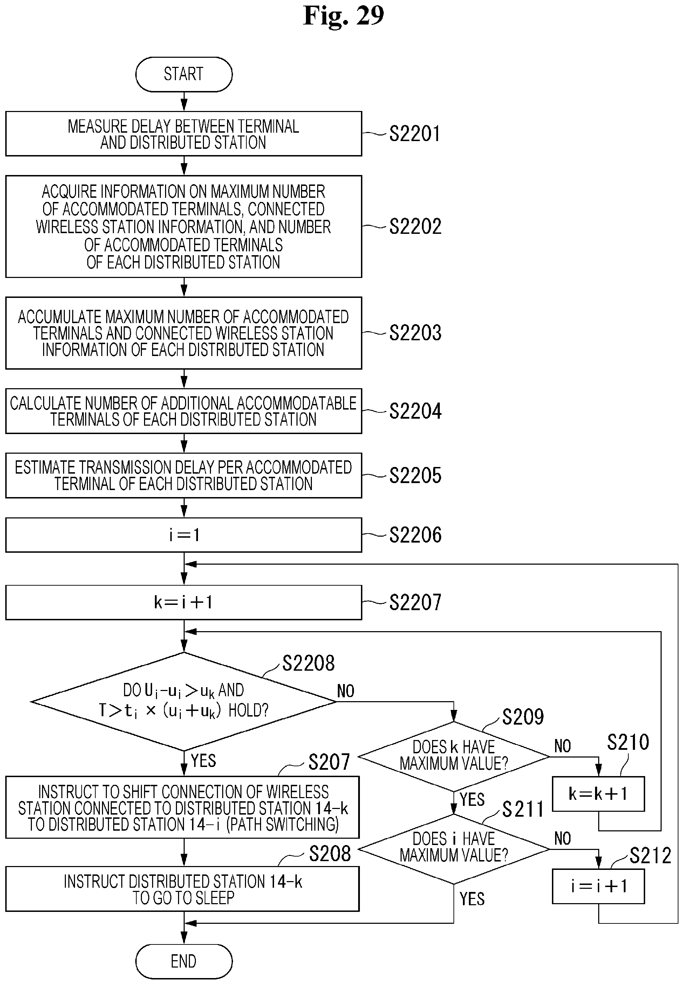

Fig. 29 is a flowchart illustrating an example of a flow of the sleep process executed by the management control device 20d in the fourth embodiment. Note that, in the process illustrated in Fig. 29, more specifically illustrated contents of the process illustrated in Fig. 28 will be described. In Fig. 29, the same processes as the processes in Fig. 4 will be given the same reference signs as the reference signs in Fig. 4, and description thereof will be omitted.

The delay measurement unit 213d measures a transmission delay between the terminal 11 and each distributed station 14 (step S2201). The acquisition unit 211 acquires, from each distributed station 14, the information on the maximum number of accommodated terminals, the connected wireless station information, and the number of accommodated terminals of each distributed station, as the cooperation information (step S2202).

The acquisition unit 211 accumulates the acquired cooperation information for each distributed station 14 in the cooperation information accumulation unit 221 (step S2203). The real-time analysis unit 222d calculates the number of additional accommodatable terminals of each distributed station 14 on the basis of the cooperation information for each distributed station 14 accumulated in the cooperation information accumulation unit 221 (step S2204). Furthermore, the real-time analysis unit 222d estimates a delay time per accommodated terminal of each distributed station 14 on the basis of the information on the measured transmission delay between the terminal 11 and each distributed station 14 (step S2205).

Specifically, the real-time analysis unit 222d estimates a transmission delay tᵢ per accommodated terminal of the distributed station 14-i by dividing a value Tᵢ of the transmission delay of the distributed station 14-i obtained in the process in step S2201 by the number of accommodated terminals uᵢ of the distributed station 14-i (Tᵢ/uᵢ). Next, the real-time analysis unit 222d substitutes a value of 1 for the constant i (step S2206). Next, the real-time analysis unit 222d substitutes a value of (i+1) for k (step S2207).

Thereafter, the real-time analysis unit 222d determines whether or not Uᵢ - uᵢ > uₖ and T > tᵢ × (uᵢ + uₖ) are satisfied (step S2208). In the fourth embodiment, tᵢ represents the transmission delay tᵢ per accommodated terminal of the distributed station 14-i. The condition indicated by Uᵢ - uᵢ > uₖ and T > tᵢ × (uᵢ + uₖ) is a specific example of the fourth switching condition. When determining that the fourth switching condition is satisfied (step S2208 - YES), the real-time analysis unit 222d executes the processes in step S207 and the subsequent steps. On the other hand, when determining that the fourth switching condition is not satisfied (step S2208 - NO), the real-time analysis unit 222d executes the processes in step S209 and the subsequent steps.

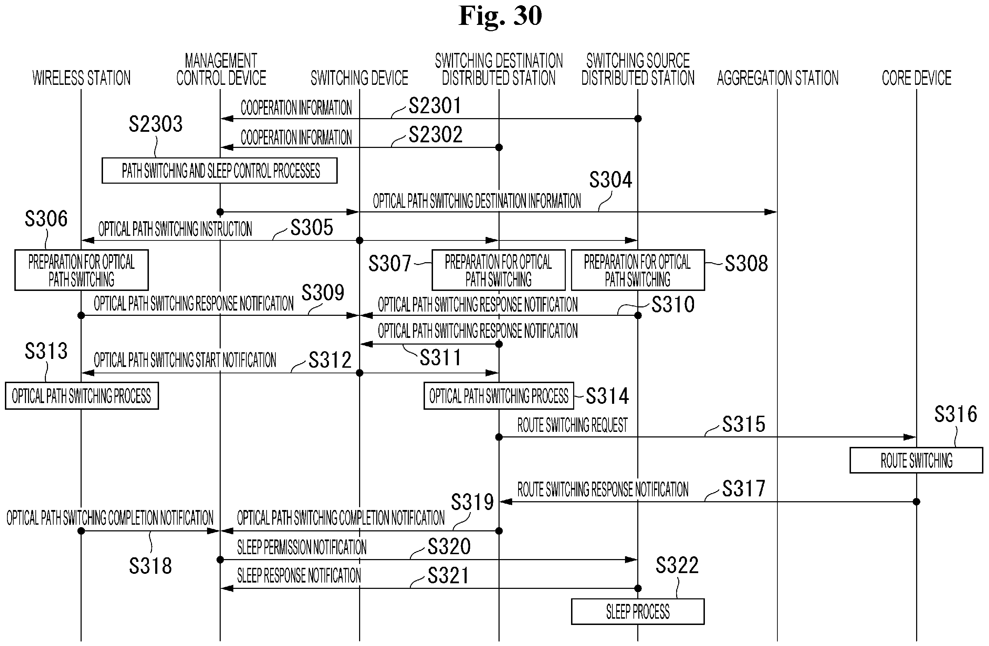

Fig. 30 is a sequence diagram illustrating an example of a detailed flow of the sleep process executed by the mobile NW system 100d in the fourth embodiment. In Fig. 30, the same processes as the processes in Fig. 5 will be given the same reference signs as the reference signs in Fig. 5, and description thereof will be omitted. Note that, in the description of Fig. 30, it is assumed that the distributed station 14-1 is a switching destination distributed station and the distributed station 14-2 is a switching source distributed station. Here, expressions of the switching destination distributed station 14-1 and the switching source distributed station 14-2 will be employed for description.

The cooperation information collection unit 21d of the management control device 20d acquires the cooperation information from the switching destination distributed station 14-1 and the switching source distributed station 14-2 at a predetermined cycle (step S2301, step S2302). Note that it is assumed that the cooperation information acquired in steps S2301 and S2302 includes information on a transmission delay between the terminal 11 and each distributed station 14 in addition to at least the information on the number of accommodated terminals, the information on the maximum number of accommodated terminals, and the like. The cooperation information collection unit 21d accumulates the acquired cooperation information in the cooperation information accumulation unit 221.

When the cooperation information is accumulated in the cooperation information accumulation unit 221, the real-time analysis unit 222d performs judgment on optical path switching and sleep control (step S2303). The judgment on optical path switching and sleep control in step S2303 is a determination as to whether or not the fourth switching condition is satisfied in step S2106. Here, it is assumed that the fourth switching condition in step S2106 is satisfied. When the fourth switching condition is satisfied, the real-time analysis unit 222d executes the processes in step S304 and the subsequent steps.

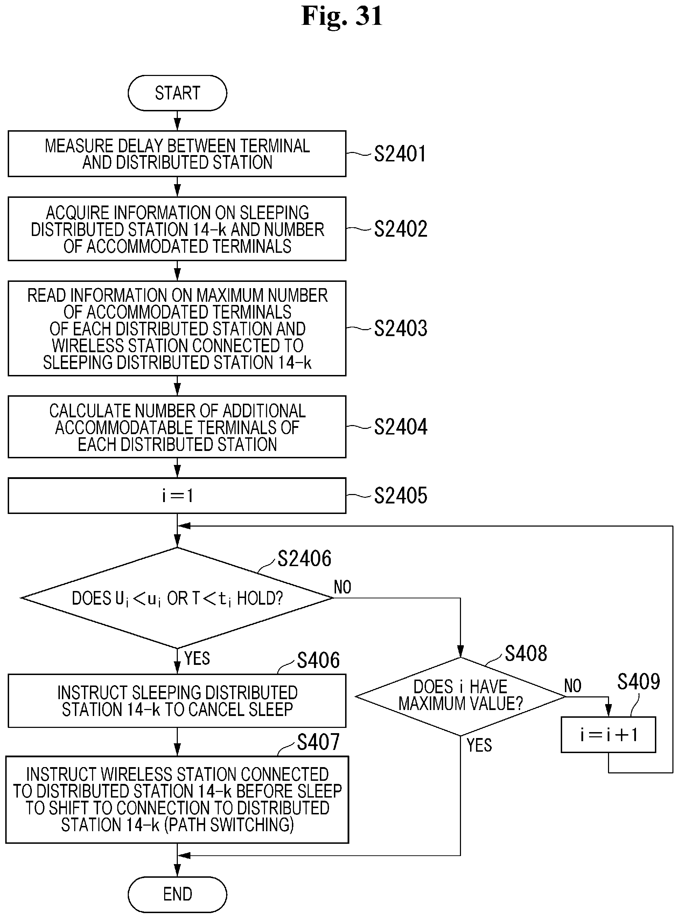

Fig. 31 is a flowchart illustrating an example of a flow of a sleep cancellation process executed by the management control device 20d in the fourth embodiment. In Fig. 31, the same processes as the processes in Fig. 6 will be given the same reference signs as the reference signs in Fig. 6, and description thereof will be omitted.

The delay measurement unit 213d measures a transmission delay between the terminal 11 and each distributed station 14 (step S2401). The acquisition unit 211 acquires information on the number of accommodated terminals and the sleeping distributed station 14-k from each distributed station 14 as the cooperation information (step S2402). The acquisition unit 211 notifies the analysis unit 22d of the acquired information on the number of accommodated terminals and the sleeping distributed station 14-k, and information on the transmission delay.

The real-time analysis unit 222d of the analysis unit 22d reads information on the maximum number of accommodated terminals of each distributed station 14 and information on the wireless station 12 connected to the sleeping distributed station 14-k from the cooperation information accumulation unit 221 (step S2403). The real-time analysis unit 222d calculates the number of additional accommodatable terminals of each distributed station 14 on the basis of the acquired cooperation information for each distributed station 14 (step S2404).

Next, the real-time analysis unit 222d substitutes a value of 1 for the constant i (step S2405). The real-time analysis unit 222d determines whether or not either Uᵢ < uᵢ or T < tᵢ is satisfied (step S2406). The condition indicated by Uᵢ < uᵢ or T < tᵢ is a specific example of a fourth sleep cancellation condition. In the fourth sleep cancellation condition, T < tᵢ means that the transmission delay between the terminal 11 and the distributed station 14-i exceeds the threshold. That is, T < tᵢ means that the transmission delay tᵢ per accommodated terminal of the distributed station 14-i exceeds the threshold.

When determining that the fourth sleep cancellation condition (for example, Uᵢ < uᵢ or T < tᵢ) is satisfied (step S2406 - YES), the real-time analysis unit 222d determines that switching of the optical path and sleep cancellation of the sleeping distributed station 14-k are required.

The real-time analysis unit 222d notifies the control unit 23 of the determination result. Thereafter, the processes in step S406 and the subsequent steps are executed. On the other hand, when determining that the fourth sleep cancellation condition (for example, Uᵢ < uᵢ or T < tᵢ) is not satisfied (step S2406 - NO), the real-time analysis unit 222d executes the process in step S408.

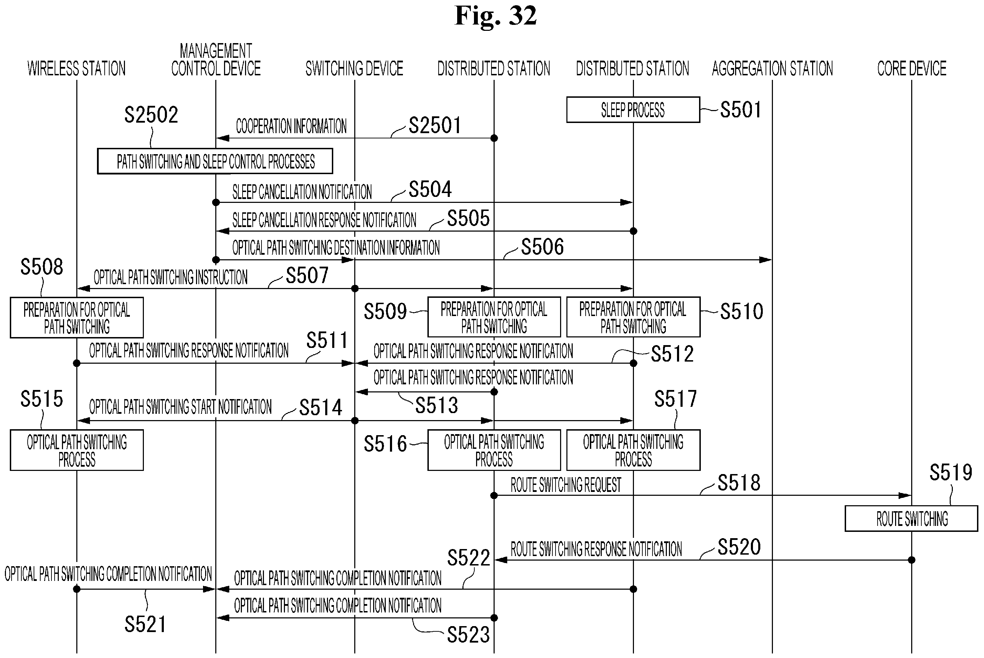

Fig. 32 is a sequence diagram illustrating an example of a detailed flow of the sleep cancellation process executed by the mobile NW system 100d in the fourth embodiment. In Fig. 32, the same processes as the processes in Fig. 7 will be given the same reference signs as the reference signs in Fig. 7, and description thereof will be omitted. Note that, in the description of Fig. 32, it is assumed that the distributed station 14-2 is in the sleep state.

The distributed station 14-2 is in the sleep state (step S501). The cooperation information collection unit 21d of the management control device 20d acquires the cooperation information from the distributed station 14-1 at a predetermined cycle (step S2501). Note that it is assumed that the cooperation information acquired in step S2501 includes information on a transmission delay between the terminal 11 and each distributed station 14 in addition to at least the information on the number of accommodated terminals, the information on the maximum number of accommodated terminals, and the like. The cooperation information collection unit 21d accumulates the acquired cooperation information in the cooperation information accumulation unit 221.

When the cooperation information is accumulated in the cooperation information accumulation unit 221, the real-time analysis unit 222d performs judgment on optical path switching and sleep control (step S2502). The judgment on optical path switching and sleep control in step S2502 is relevant to whether or not the sleep cancellation condition is satisfied. Here, it is assumed that the sleep cancellation condition is satisfied. When the sleep cancellation condition is satisfied, the real-time analysis unit 222d executes the processes in step S504 and the subsequent steps.

According to the mobile NW system 100d configured as described above, the same effects as the effects of the first embodiment can be obtained. Specifically, in the mobile NW system 100d, the management control device 20d further acquires information on a transmission delay between the terminal 11 and each distributed station 14 as the cooperation information and verifies requirements for switching the optical path on the basis of the cooperation information. When determining that switching of the optical path is required, the management control device 20d controls switching of the optical path between one or more wireless stations 12 and the plurality of distributed stations 14. Furthermore, the management control device 20d causes the distributed station that can sleep to transition to the sleep state after switching of the optical path is performed. This ensures that the optical path switching and the sleep control are performed while the load of each distributed station 14 is analyzed. Therefore, power saving can be efficiently implemented in the system as a whole.

### (Modification 1 of Fourth Embodiment)

In the above-described embodiment, a configuration in which the management control device 20d directly acquires the cooperation information from the distributed station 14 has been illustrated. The management control device 20d may acquire the cooperation information through another device. Here, the another device is, for example, a wireless controller. When configured in such a manner, the mobile NW system 100d newly includes a wireless controller 30a, and the wireless controller 30a is provided between the management control device 20d and the distributed stations 14.

The wireless controller 30a acquires the cooperation information from each distributed station 14 at a predetermined cycle by wireless communication. The wireless controller 30a sends the acquired cooperation information to the management control device 20d by wireless communication. Note that the wireless controller 30a may receive a sleep control instruction from the management control device 20d and send the received sleep control instruction to the switching source distributed station.

With this configuration, the cooperation information can be collected by wireless communication.

### (Modification 2 of Fourth Embodiment)

In the above-described embodiment, a configuration in which the management control device 20d performs the optical path switching control process and the sleep control process has been illustrated. In contrast to this, the switching device 13 may be configured to perform the optical path switching control process and the sleep control process. When configured in such a manner, the switching device 13 includes the control unit 23, and the management control device 20d does not include the control unit 23. The real-time analysis unit 222d of the management control device 20d notifies the switching device 13 of the analysis result. Note that the real-time analysis unit 222d may notify the switching device 13 of the analysis result only when optical path switching and sleep control are to be performed. The control unit 23 of the switching device 13 performs the optical path switching control process and the sleep control process on the basis of the analysis result notified by the management control device 20d.

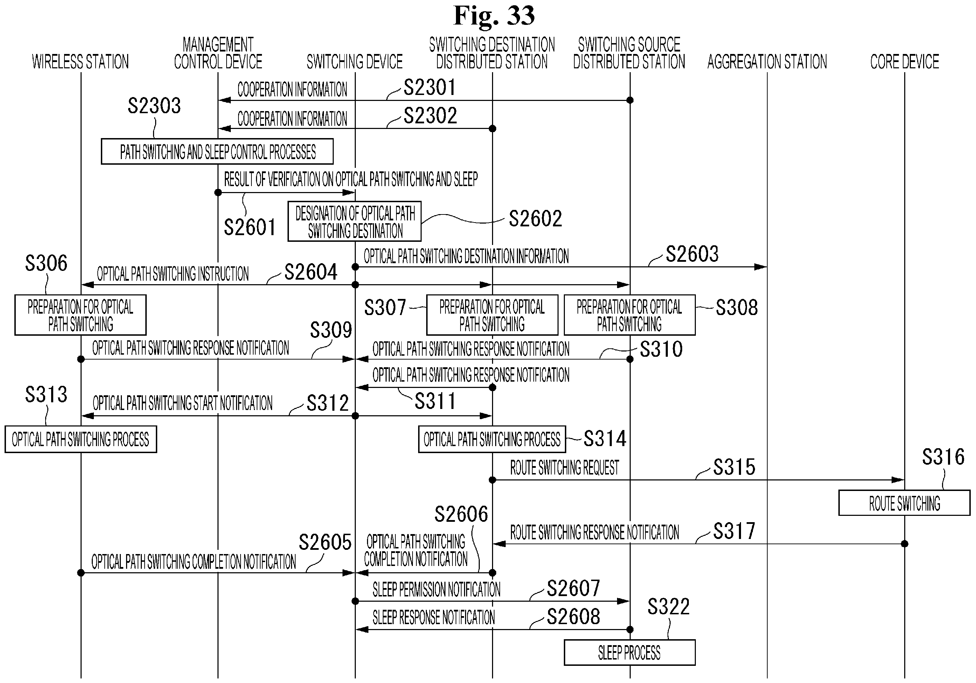

Fig. 33 is a sequence diagram illustrating an example of a detailed flow of a sleep process executed by a mobile NW system 100d in Modification 2 of the fourth embodiment. In Fig. 33, the same processes as the processes in Fig. 30 will be given the same reference signs as the reference signs in Fig. 30, and description thereof will be omitted.

After the processes from step S2301 to step S2303 are executed, a real-time analysis unit 222d instructs a switching device 13b to perform optical path switching control and sleep control when the fourth switching condition is satisfied (step S2601). The switching device 13b receives the instruction sent from the management control device 20d.

An optical path switching control unit 231 of the switching device 13b designates the switching destination of the optical path from the information included in the received instruction (step S2602). The optical path switching control unit 231 notifies an aggregation station 15 of the optical path switching destination information (step S2603). Thereafter, the optical path switching control unit 231 instructs the wireless station 12 connected to the switching source distributed station 14-2, the switching destination distributed station 14-1, and the switching source distributed station 14-2 to switch the optical path (step S2604). Thereafter, the processes from step S306 to step S317 are executed.

When switching of the optical path has been completed, the wireless station 12 sends the optical path switching completion notification to the switching device 13b (step S2605). Note that the wireless station 12 may also send the optical path switching completion notification to the management control device 20d. When switching of the optical path has been completed, the switching destination distributed station 14-1 sends the optical path switching completion notification to the switching device 13b (step S2606). Note that the switching destination distributed station 14-1 may also send the optical path switching completion notification to the management control device 20d.

When the optical path switching completion notification is received from the sending destinations of the optical path switching start notification, a sleep control unit 232 included in the switching device 13b sends the sleep permission notification to the switching source distributed station 14-2 (step S2607). When the sleep permission notification is obtained from the switching device 13b, the switching source distributed station 14-2 sends the sleep response notification to the switching device 13b (step S2608). After sending the sleep response notification, the switching source distributed station 14-2 transitions to the sleep state (step S322).

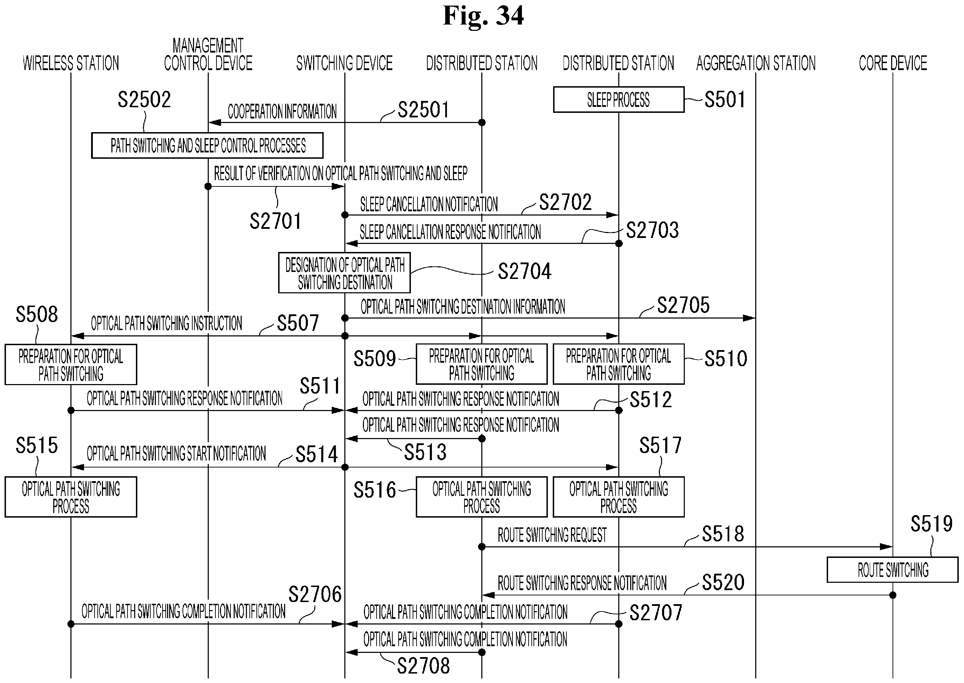

Fig. 34 is a sequence diagram illustrating an example of a detailed flow of a sleep cancellation process executed by the mobile NW system 100d in Modification 2 of the fourth embodiment. In Fig. 34, the same processes as the processes in Fig. 32 will be given the same reference signs as the reference signs in Fig. 32, and description thereof will be omitted. Note that, in the description of Fig. 34, it is assumed that the distributed station 14-2 is in the sleep state.

After the processes in steps S501, S2501, and S2502 are executed, the real-time analysis unit 222d instructs the switching device 13b to perform optical path switching control and sleep control when a sleep cancellation condition is satisfied (step S2701). The switching device 13b receives the instruction sent from the management control device 20d.

The sleep control unit 232 of the switching device 13b sends the sleep cancellation notification to the distributed station 14-2 on the basis of the information included in the received instruction (step S2702). In response to the reception of the sleep cancellation notification, the distributed station 14-2 sends the sleep cancellation response notification to the switching device 13b (step S2703).

The optical path switching control unit 231 of the switching device 13b designates the switching destination of the optical path from the information included in the received instruction (step S2704). The optical path switching control unit 231 of the switching device 13b notifies the aggregation station 15 of the optical path switching destination information (step S2705). Thereafter, the processes from step S507 to step S520 are executed.

When switching of the optical path has been completed, the wireless station 12 sends the optical path switching completion notification to the switching device 13b (step S2706). When switching of the optical path has been completed, the distributed station 14-1 sends the optical path switching completion notification to the switching device 13b (step S2707). When switching of the optical path has been completed, the distributed station 14-2 sends the optical path switching completion notification to the switching device 13b (step S2708).

### (Modification 1 Common to First to Fourth Embodiments)

The mobile NW systems 100, 100a, 100c, and 100d may not include the switching device 13. When configured in such a manner, each wireless station 12 and each aggregation station 15 are connected in advance in a full mesh network form. Furthermore, when switching the optical path, the optical path switching control unit 231 instructs the wireless station 12 and the distributed stations 14 that are objects to be subjected to optical path switching to switch the optical path. For example, the optical path switching control unit 231 sends the optical path switching instruction (for example, the process in step S305 in Fig. 5) to the wireless station 12 and the distributed stations 14 that are objects to be subjected to optical path switching and sends the optical path switching start notification (for example, the process in step S312 in Fig. 5) to the wireless station 12 and the distributed stations 14 that are objects to be subjected to optical path switching after the optical path switching response notification is obtained from the wireless station 12 and the distributed stations 14.

### (Modification 2 Common to First to Fourth Embodiments)

In each embodiment, the configuration in which the switching source distributed station transitions to the sleep state with the instruction on sleep issued by the management control device 20, 20c, or 20d to the switching source distributed station as a trigger has been illustrated. The switching source distributed station may be configured to autonomously transition to the sleep state regardless of the sleep instruction from the management control device 20, 20c, or 20d. When configured in such a manner, the switching source distributed station autonomously transitions to the sleep state when an autonomous sleep condition is satisfied. The autonomous sleep condition is a condition for the switching source distributed station to autonomously transition to the sleep state and is, for example, that there is no wireless station 12 connected to the own device (that the number of wireless stations 12 connected to the own device is zero) or that no traffic flows in for a fixed period of time ΔT. When configured in such a manner, the switching source distributed station includes a sleep control unit. The sleep control unit included in the switching source distributed station causes the own device to transition to the sleep state when the autonomous sleep condition is satisfied. Note that this configuration is also applicable to a case where the switching device 13b includes the control unit 23.

As the information collected by the management control devices 20, 20c, and 20d, the number of terminals of each distributed station 14, the number of terminals of each wireless station 12, an actual amount of traffic, and a value obtained by multiplying the number of accommodated terminals by an average throughput of one terminal can also be used apart from the number of accommodated terminals.

At least some or all of the functional units of the management control devices 20, 20b, 20c, and 20d or some or all of the functional units of the switching devices 13 and 13b are implemented as software by a processor such as a central processing unit (CPU) executing a program stored in a storage device including a nonvolatile recording medium (non-transitory recording medium) and a storage unit. The program may be recorded in a computer-readable non-transitory recording medium. The computer-readable non-transitory recording medium is, for example, a portable medium such as a flexible disk, a magneto-optical disk, a read only memory (ROM), or a compact disc read only memory (CD-ROM), of a non-transitory recording medium such as a storage device built in a computer system, such as a hard disk.

At least some or all of the functional units of the management control devices 20, 20b, 20c, and 20d or some or all of the functional units of the switching devices 13 and 13b may be implemented by using, for example, hardware including an electronic circuit (or electronic circuitry) using a large scale integrated circuit (LSI), an application specific integrated circuit (ASIC), a programmable logic device (PLD), a field programmable gate array (FPGA), or the like.

Although the embodiments of this invention have been described above in detail with reference to the drawings, specific configurations are not restricted to these embodiments and include design and the like without departing from the spirit of this invention.

### Industrial Applicability

The present invention can be applied to optical communication systems such as an optical access system.

### Reference Signs List

- 11: Terminal
- 12, 12-1 to 12-4: Wireless station
- 13, 13b: Switching device
- 14, 14-1 to 14-2: Distributed station
- 15: Aggregation station
- 16: Core device
- 20, 20b, 20c, 20d: Management control device
- 21, 21c, 21d: Cooperation information collection unit
- 22: Analysis unit
- 23: Control unit
- 30a: Wireless controller
- 100, 100a, 100c, 100d: Mobile NW system
- 211: Acquisition unit
- 212c: Distributed station monitoring unit
- 213d: Delay measurement unit
- 221: Cooperation information accumulation unit
- 222: Real-time analysis unit
- 231: Optical path switching control unit
- 232: Sleep control unit

## Claims

1. A communication system comprising:
one or more wireless stations configured to perform wireless communication with one or more terminals;
a plurality of distributed stations connected, directly or via another device, to the one or more wireless stations;
a cooperation information collection unit configured to acquire, at a predetermined cycle, cooperation information indicating a state of communication between the plurality of distributed stations and the one or more terminals;
an optical path switching control unit configured to control switching of an optical path between the one or more wireless stations and the plurality of distributed stations when it is determined, on the basis of the cooperation information, that the switching of the optical path between the one or more wireless stations and the plurality of distributed stations is required; and
a sleep control unit configured to cause each of the distributed stations that can sleep to transition to a sleep state after the switching of the optical path is performed.

2. The communication system according to claim 1, wherein
the another device is a switching device that switches the optical path between the one or more wireless stations and the plurality of distributed stations,
in a case where the switching device is provided, the optical path switching control unit instructs the switching device to switch the optical path between the one or more wireless stations and the plurality of distributed stations when it is determined, on the basis of the cooperation information, that the switching of the optical path between the one or more wireless stations and the plurality of distributed stations is required, and
the switching device switches the distributed stations to which the one or more wireless stations are connected, by switching the optical path in response to an instruction from the optical path switching control unit.

3. The communication system according to claim 1, wherein
the another device is a switching device configured to switch the optical path between the one or more wireless stations and the plurality of distributed stations,
in a case where the switching device is provided, the switching device includes the optical path switching control unit and the sleep control unit, and
the optical path switching control unit receives, from an outside, a notification indicating that the switching of the optical path between the one or more wireless stations and the plurality of distributed stations is required, and controls the switching of the optical path between the one or more wireless stations and the plurality of distributed stations in response to the received notification.

4. The communication system according to any one of claims 1 to 3, wherein
the cooperation information includes at least information on a number of accommodated terminals for each of the distributed stations and information on a maximum number of accommodated terminals for each of the distributed stations,
the communication system further comprising an analysis unit configured to determine, on a basis of the information on the number of accommodated terminals for each of the distributed stations and the information on the maximum number of accommodated terminals for each of the distributed stations, that the switching of the optical path between the one or more wireless stations and the plurality of distributed stations is required when all terminals accommodated in one of the distributed stations that is an object to be subjected to sleep judgment are allowed to be accommodated in another one of the distributed stations, wherein
the optical path switching control unit controls the switching of the optical path so as to connect the wireless stations connected to the one of the distributed stations that is an object to be subjected to the sleep judgment to the another one of the distributed stations, and
the sleep control unit causes the one of the distributed stations that is an object to be subjected to the sleep judgment to transition to the sleep state, as one of the distributed stations that can sleep.

5. The communication system according to claim 4, wherein
the cooperation information further includes at least one of processing load information relating to a processing load for each of the distributed stations or information on a transmission delay between the one or more terminals and the plurality of distributed stations, and
the analysis unit determines, on the basis of the information on the number of accommodated terminals for each of the distributed stations, the information on the maximum number of accommodated terminals for each of the distributed stations, and the processing load information or the information on the transmission delay, that the switching of the optical path between the one or more wireless stations and the plurality of distributed stations is required when all terminals accommodated in the one of the distributed stations that is an object to be subjected to the sleep judgment are allowed to be accommodated in another one of the distributed stations.

6. The communication system according to claim 5, wherein
the processing load information includes information on a memory usage rate for each of the distributed stations.

7. A management control device comprising:
a cooperation information collection unit configured to acquire, at a predetermined cycle, cooperation information indicating a state of communication between a plurality of distributed stations connected, directly or via another device, to one or more wireless stations that perform wireless communication with one or more terminals, and the one or more terminals;
an analysis unit configured to verify, on the basis of the cooperation information, whether or not switching of an optical path between the one or more wireless stations and the plurality of distributed stations and sleep control are required;
an optical path switching control unit that controls the switching of the optical path between the one or more wireless stations and the plurality of distributed stations when it is determined that the switching of the optical path between the one or more wireless stations and the plurality of distributed stations is required; and
a sleep control unit configured to cause each of the distributed stations that can sleep to transition to a sleep state after the switching of the optical path is performed.

8. A control method comprising:
acquiring, at a predetermined cycle, cooperation information indicating a state of communication between a plurality of distributed stations connected, directly or via another device, to one or more wireless stations that perform wireless communication with one or more terminals, and the one or more terminals;
controlling switching of an optical path between the one or more wireless stations and the plurality of distributed stations when it is determined, on the basis of the cooperation information, that the switching of the optical path between the one or more wireless stations and the plurality of distributed stations is required; and
causing each of the distributed stations that can sleep to transition to a sleep state after the switching of the optical path is performed.
